(19) Europäisches Patentamt
European Patent Office
Office européen des brevets

(11) EP 2 678 290 B1

(12) # EUROPEAN PATENT SPECIFICATION

(45) Date of publication and mention of the grant of the patent:
**29.08.2018 Bulletin 2018/35**

(21) Application number: **12716775.7**

(22) Date of filing: **24.02.2012**

(51) Int Cl.:
***C04B 20/06*** *(2006.01)* ***C04B 28/14*** *(2006.01)*

(86) International application number:
**PCT/US2012/026595**

(87) International publication number:
**WO 2012/116313 (30.08.2012 Gazette 2012/35)**

(54) **LOW WEIGHT AND DENSITY FIRE-RESISTANT GYPSUM PANEL**

FEUERFESTE GIPSPLATTE MIT NIEDRIGEM GEWICHT UND NIEDRIGER DICHTE

PANNEAU EN GYPSE RÉSISTANT AU FEU, DE FAIBLE POIDS ET FAIBLE DENSITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.02.2011 US 201113035800**

(43) Date of publication of application:
**01.01.2014 Bulletin 2014/01**

(60) Divisional application:
**16192540.9 / 3 147 268**

(73) Proprietor: **United States Gypsum Company**
**Chicago, IL 60661-3676 (US)**

(72) Inventors:
- **YU, Qiang**
  **Grayslake**
  **Illinois 60030 (US)**
- **SONG, Weixin David**
  **Lake Forest**
  **Illinois 60045 (US)**
- **VEERAMASUNENI, Srinivas**
  **Round Lake**
  **Illinois 60073 (US)**
- **LUAN, Wenqi**
  **Hawthorn Woods**
  **Illinois 60047 (US)**

(74) Representative: **BSB Patentanwälte**
**Schütte & Engelen Partnerschaft mbB**
**Am Markt 10**
**59302 Oelde (DE)**

(56) References cited:
**CN-A- 101 012 119**
**US-A- 4 159 302**
**US-A1- 2005 263 925**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 678 290 B1

## Description

CROSS-REFERENCE TO RELATED PATENT APPLICATIONS

This continuation-in-part application claims the benefit of earlier U.S. Patent Application No. 12/795,125, filed June 7, 2010, which is a continuation of U.S. Patent Application No. 11/449,177, filed June 7, 2006, which issued as U.S. Patent No. 7, 731,794 on June 8, 2010, which claims priority to U.S. Provisional Patent Application No. 60/688,839, filed June 9, 2005.

BACKGROUND OF THE INVENTION

The above-referenced earlier applications pertain to methods of making gypsum slurries containing a phosphate-containing component, pregelatinized starch and a naphthalenesulfonate dispersant, and to products made therefrom. The earlier applications also pertain to methods of increasing the dry strength of low weight and density gypsum panels by introducing to the slurry used to make the panels a phosphate-containing component, pregelatinized starch and naphthalenesulfonate dispersant.

Conventional gypsum-containing products such as gypsum panels have many advantages, such as low cost and easy workability, although substantial amounts of gypsum dust can be generated when the products are cut or drilled. Various improvements have been achieved in the earlier applications in making gypsum-containing products by introducing starches and other ingredients in the slurries used to make such products. Starch can increase flexural strength and compressive strength of gypsum-containing products including gypsum panels.

It is generally necessary to use substantial amounts of water in gypsum slurries containing pregelatinized starch in order to ensure proper flowability of the slurry. Unfortunately, most of this water must eventually be driven off by heating, which is expensive due to the high cost of the fuels used in the heating process. The heating step is also time-consuming. As explained in the earlier applications, it has been found that the use of naphthalenesulfonate dispersants can increase the fluidity of the slurries, thus overcoming the water demand problem. In addition, it has also been found that the naphthalenesulfonate dispersants, if the usage level is high enough, can cross-link to the pregelatinized starch to bind the gypsum crystals after drying, thus increasing dry strength of the gypsum composite.

Phosphate-containing components have not in the past been recognized to affect gypsum slurry water requirements. However, as explained in the earlier applications, the present inventors discovered that increasing the level of the phosphate-containing component to hitherto unknown levels in the presence of a specific dispersant makes it possible to achieve proper slurry flowability with unexpectedly reduced amounts of water, even in the presence of high starch levels. This, of course, is highly desirable because it in turn reduces fuel usage as well as the process time associated with subsequent water removal process steps. The present inventors also discovered that the dry strength of gypsum panel can be increased by using a naphthalenesulfonate dispersant in combination with pregelatinized starch in the slurry used to make the panels.

The inventions of the earlier applications included gypsum panels comprising a set gypsum composition formed between two substantially parallel cover sheets, the set gypsum composition made using the gypsum-containing slurry of water, stucco, pregelatinized starch, a naphthalenesulfonate dispersant and optionally a water-soluble phosphate, preferably, sodium trimetaphosphate. This gypsum panel has a high strength, yet much lower weight than conventional gypsum panels. In addition, much less dust is generated on cutting, sawing, snapping, or drilling the panels made according to this embodiment.

Another embodiment of the invention of the earlier applications comprised a method of making gypsum panels including mixing a gypsum-containing slurry comprising water, stucco, pregelatinized starch, and a naphthalenesulfonate dispersant, wherein the pregelatinized starch is present in an amount of at least about 0.5% by weight up to about 10% by weight based on the weight of stucco. The resulting gypsum-containing slurry is deposited on a first paper cover sheet, and a second paper cover sheet is placed over the deposited slurry to form a gypsum panel. The gypsum panel is cut after the gypsum-containing slurry has hardened sufficiently for cutting, and the resulting gypsum panel is dried. The gypsum-containing slurry can optionally contain a phosphate-containing component, for example, sodium trimetaphosphate. Other conventional ingredients will also be used in the slurry including, as appropriate, accelerators, binders, paper fiber, glass fiber, and other known ingredients. A soap foam is normally added to reduce the density of the final gypsum panel product.

The present invention generally pertains to low weight and density gypsum panels with good thermal insulation properties, good heat shrinkage resistance, good fire resistance, and in some aspects of the invention, good water resistance.

Gypsum panels used in building and other construction applications (such as gypsum wallboard or ceiling panels) typically comprise a gypsum core with cover sheets made of paper, fiberglass or other suitable materials. Gypsum panels typically are manufactured by mixing "stucco" with water and other ingredients to prepare a slurry that is used

to form the cores of the panels.

As generally understood in the art, stucco comprises predominately one or more forms of calcined gypsum, *i.e.* gypsum subjected to dehydration (typically by heating) to form anhydrous gypsum or hemihydrate gypsum ($CaSO_4 \cdot ½ H_2O$). The calcined gypsum may comprise beta calcium sulfate hemihydrate, alpha calcium sulfate hemihydrate, water-soluble calcium sulfate anhydrite, or mixtures of any or all of these, from natural or synthetic sources. When introduced into the slurry used to form the cores of the panels, the calcined gypsum begins a hydration process which is completed during the formation of the gypsum panels. This hydration process, when properly completed, yields a generally continuous crystalline matrix of set gypsum dihydrate in various crystalline forms (*i.e.* forms of $CaSO_4 \cdot 2H_2O$).

During the formation of the panels, the cover sheets typically are provided as continuous webs. The gypsum slurry is deposited as a flow or ribbon on a first of the cover sheets. The slurry is spread across the width of the first cover sheet at a predetermined approximate thickness to form the panel core. A second cover sheet is then placed on top, sandwiching the gypsum core between the cover sheets and forming a continuous panel.

The continuous panel typically is transported along a conveyer to allow the core to continue the hydration process. When the core is sufficiently hydrated and hardened, it is cut to one or more desired sizes to form individual gypsum panels. The panels are then passed through a kiln at temperatures sufficient to complete the hydration process and dry the panels to a desired free moisture level (typically a relatively low free moisture content).

Depending on the process employed and the expected use of the panels and other considerations, additional slurry layers, strips or ribbons comprising gypsum and other additives may be applied to the first and/or second cover sheets to provide specific properties to the finished panels, such as hardened edges or a hardened panel face. Similarly, foam may be added to the gypsum core slurry and/or other slurry strips or ribbons at one or more locations in the process to provide a distribution of voids within the gypsum core or portions of the core of the finished panels.

The resulting panels may be cut and processed for use in a variety of applications depending on the desired panel size, cover layer composition, core compositions, etc. Gypsum panels typically vary in thickness from about ¼ inch to about one inch depending on their expected use and application. The panels may be applied to a variety of structural elements used to form walls, ceilings and other similar systems using one or more fastening elements, such as screws, nails and/or adhesives.

Should the finished gypsum panels be exposed to relatively high temperatures, such as those produced by high temperature flames or gases, portions of the gypsum core may absorb sufficient heat to cause the release of water from the gypsum dihydrate crystals of the core. The absorption of heat and release of water from the gypsum dihydrate may be sufficient to retard heat transmission through or within the panels for a period of time. At certain high temperature levels, the high temperature flames or gases also may cause phase changes in the gypsum core and rearrangement of the crystalline structures. Such temperatures further may cause melting or other complexing of salts and impurities in the gypsum core crystal structures. The heat absorbed by the gypsum core as a result of such high temperature flames or gases, in addition, can be sufficient to recalcine portions of the core, depending on the heat source temperatures and exposure time.

More specifically, when heated to 212°F (100°C), the gypsum core undergoes a decomposition reaction in which 75% of the crystalline water is driven off as steam as the gypsum converts to hemihydrate, per Eq. 1 below:

$$CaSO_4 \cdot 2H_2O \rightarrow CaSO_4 \cdot ½H_2O + 1½H_2O \qquad [1]$$

Further heating to 250°F (120°C) drives off the remaining crystalline water as the hemihydrate converts to anhydrite, which is calcium sulfate, (Eq. 2):

$$CaSO_4 \cdot ½H_2O \rightarrow CaSO_4 + ½H_2O \qquad [2]$$

By the time the core reaches 392°F (200°C) all of the gypsum is converted to the anhydrite phase. These transition temperatures are approximate and can vary with impurities or additives in the gypsum. The heats of dehydration required to drive reactions [1] and [2] total 390 Btu/lb (906 kJ/kg). This energy absorbed by the phase change reactions and the heat carried away by the steam that is produced act as a substantial heat sink and are responsible for much of gypsum's unique quality as a fire protection material. For example, it requires over seven times as much energy to heat gypsum from 75°F to 400°F (24 to 204°C) as it does to heat an equal mass of concrete.

As gypsum calcines, absorbing and dissipating thermal energy in the process, the volume of the crystal matrix shrinks. The amount of shrinkage depends on the original composition of the gypsum, which will include varying impurities from the mineral deposit from which it is mined or additives from the manufacturing process. It is commonly assumed that the majority of the shrinkage occurs during the dehydration reactions [1] and [2] as the gypsum converts to anhydrite.

Shrinkage of the gypsum core influences the performance of gypsum panels in the presence of high temperate flames or gases. The greater the shrinkage the more difficult it will be to achieve a given level of fire resistance performance. This can be exacerbated or diminished depending on the building assembly itself.

Shrinkage cracks occur because the gypsum panel is constrained from movement in the plane of the panel by its attachment in the building assembly to framing or other support structures. If the building assembly deflects *away from* the fire, the panel on the fire side is placed into compression as it deforms into a concave surface. Shrinkage effects are diminished as the panel is compressed laterally and longitudinally along its length and width. This occurs with wood stud walls where the studs char and weaken from the fire side causing them to deflect away from the fire under the vertical load imposed on the structure.

In contrast, if the building assembly deflects *toward* the fire it will force the panel on the fire exposed side to become a convex surface placed in tension. Sensitivity to shrinkage cracking increases since the movement of the structure pulls on the panel. This occurs with lightweight steel framed walls where the metal studs heat and expand most on the fire side, as well as with roof-ceiling and floor-ceiling assemblies where gravity loads cause the assembly to deflect downwardly as it weakens from the fire below. The overall impact on assembly fire resistance depends on the relative rates of shrinkage and deflection.

Gypsum panels may experience shrinkage of the panel dimensions in one or more directions as one result of some or all of these high temperature heating effects, and such shrinkage may cause failures in the structural integrity of the panels. When the panels are attached to wall, ceiling or other framing assemblies, the panel shrinkage may lead to the separation of the panels from other panels mounted in the same assemblies and from their supports and, in some instances, causing collapse of the panels or the supports (or both). As a result, heated air at high temperatures may pass into or through a wall or ceiling structure.

As explained above, gypsum panels resist the effects of relatively high temperatures for a period of time, which may inherently delay passage of high heat levels through or between the panels and into (or through) systems using them. Gypsum panels referred to as fire resistant or "fire rated" typically are formulated to enhance the panels' ability to delay the passage of heat though wall or ceiling structures and play an important role in controlling the spread of fire within buildings. As a result, building code authorities and other concerned public and private entities typically set stringent standards for the fire resistance performance of fire rated gypsum panels.

The ability of gypsum panels to resist fire and the associated extreme heat may be evaluated by carrying out appropriate tests. Examples of such tests that are routinely used in the construction industry, include those published by Underwriters Laboratories ("UL"), such as the UL U305, U419 and U423 test procedures and protocols, as well as procedures described in specification E119 published by the American Society for Testing and Materials (ASTM). Such tests may comprise constructing test assemblies using gypsum panels, normally in a single-layer application of the panels on each face of a wall frame formed by wood or steel studs. Depending on the test, the assembly may or may not be subjected to load forces. The face of one side of the assembly is exposed to increasing temperatures for a period of time in accordance with a heating curve, such as those called for in the UL U305, U419 and U423 test procedures and the ASTM E119 procedures.

The temperatures proximate the heated side and the temperatures at the surface of the unheated side of the assembly are monitored during the tests to evaluate the temperatures experienced by the exposed gypsum panels and the heat transmitted through the assembly to the unexposed panels. The tests are terminated upon one or more structural failures of the panels, and/or when the temperatures on the unexposed side of the assembly exceed a predetermined threshold. Typically, these threshold temperatures are based on the maximum temperature at any one of such sensors and/or the average of the temperatures sensed by sensors on the face of the unexposed gypsum panels.

Test procedures such as those set forth in UL U305, U419 and U423, and ASTM E119 are directed to an assembly's resistance to the transmission of heat through the assembly as a whole. The tests also provide, in one aspect, a measure of the resistance of the gypsum panels used in the assembly to shrinkage in the in the x-y direction (width and length) as the assembly is subjected to high temperature heating. Such tests also provide a measure of the panels' resistance to losses in structural integrity that result in opening gaps or spaces between panels in a wall assembly, with the resulting passage of high temperatures into the interior cavities of the assembly. In another aspect, the tests provide a measure of the gypsum panels' ability to resist the transmission of heat through the panels and the assembly. It is believed that such tests reflect the specified system's capability for providing building occupants and firemen/fire control systems respectively a window of opportunity to escape or address fire conditions.

In the past, various strategies were employed to improve the fire resistance of fire rated gypsum panels. For example, thicker, denser panel cores have been used to increase the presence of both water and gypsum in the panels enhancing their ability to act as a heat sink, to reduce panel shrinkage, and to increase the structural stability and strength of the panels. Alternatively or in addition to increasing the density of the panel cores, various ingredients including glass and other fibers have been incorporated into the gypsum cores to enhance gypsum panels' fire resistance by increasing the tensile strength of the panel cores and by distributing shrinkage stresses throughout the core matrices. Similarly, amounts of certain clays, such as those of less than about one micrometer in size, and colloidal silica or alumina additives, such as those of less than one micrometer in size, have been used in the past to provide increased fire resistance (and high temperature shrinkage resistance) in gypsum panel cores.

It has been an article of faith in the art, however, that reducing the weight and/or density of the gypsum panels

by reducing the amount of gypsum in the core would adversely affect both the structural integrity of the panels and their resistance to fire and high heat conditions.

Another approach employed in the past to improve the fire resistance of fire rated gypsum panels has been to add unexpanded vermiculite (also referred to as vermiculite ore) and mineral or glass fibers into the core of gypsum panels. In such approaches, the vermiculite is expected to expand under heated conditions to compensate for the shrinkage of the gypsum components of the core. The mineral/glass fibers were believed to hold portions of dried gypsum together. Such an approach is discussed in U.S. Patent Nos. 2,526,066 and 2,744,022. Both references, however, rely on a high density core to provide sufficient gypsum to act as a heat sink. They disclose the preparation of 1,27 cm (½ inch) thick gypsum panels with a weight of, 9,8 to 11,2 kg/m$^2$ (2 to 2.3 pounds per square foot (2,000 to 2,300 pounds per thousand square feet ("lb/msf')) and densities of 0,8 g/cm$^3$ (about 50 pounds per cubic foot ("pcf')) or greater. The '022 patent, in addition, was directed at increasing the gypsum content (and thus density and weight) of the panels disclosed in the '066 patent and reducing the mineral/glass fiber content of those panels to provide a yet greater gypsum-heat sink capacity. References such as the '022 patent further recognized that the expansive properties of vermiculite, unless limited, would result in spalling (that is, fragmenting, peeling or flaking) of the core and destruction of a wall assembly made with panels containing vermiculite in a relatively short time at high temperature conditions.

In another example, U.S. Patent No. 3,454,456 describes the introduction of unexpanded vermiculite into the core of fire rated gypsum panels to resist the shrinkage of the panels. The '456 patent also relies on a relatively high gypsum content and density to provide a desired heat sink capacity. The '456 patent discloses panel weights for finished 1,27 cm (½ inch) gypsum panels with a minimum weight of 9,4 kg/m$^2$ (about 1925 lb/msf) and a density of 0,74 g/cm$^3$ (about 46 pcf). This is a density comparable to thicker and much heavier 5/8 inch thick gypsum panels (10,6 to 11,2 kg/m$^2$ (about 2175 to 2300 lb/msf)) presently offered commercially for fire rated applications.

The '456 patent also discloses that using vermiculite in a gypsum panel core to raise the panel's fire rating is subject to significant limitations. For example, the '456 patent notes (like the '022 patent) that the expansion of the vermiculite within the core may cause the core to disintegrate due to spalling and other destructive effects. The '456 patent also discloses that unexpanded vermiculite particles may so weaken the core structure that the core becomes weak, limp, and crumbly. The '456 patent purports to address such significant inherent limitations with the use of vermiculite in gypsum panels by employing a "unique" unexpanded vermiculite with a relatively small particle size distribution (more than 90% of the unexpanded particles smaller than a no. 50 mesh size (approximately 0.117 inch (0.297mm) openings), with less than 10% slightly larger than no. 50 mesh size). This approach purportedly inhibits the adverse effects of vermiculite expansion on the panel, as explained at col. 2,1. 52-72 of the '456 patent.

In another approach, U.S. Patent 3,616,173 is directed to ½ inch thick, fire resistant gypsum panels with a gypsum core characterized by the '173 patent as lighter weight or lower density. The '173 patent distinguished its panels from prior art 1,27 cm (1/2 inch) panels weighing 9,8 kg/m$^2$ (about 2,000 lb/msf) or more and having core densities in excess of 0,77 g/cm$^3$ (about 48 pcf). Thus, '173 patent discloses panels with a density of at or above 0,56 g/cm$^3$ (about 35 pcf), and preferably 0,64 g/cm$^3$ to 0,8 g/cm$^3$ (about 40 pcf to about 50 pcf). The '173 patent achieves its disclosed core densities by incorporating significant amounts of small particle size inorganic material of either clay, colloidal silica, or colloidal alumina in its gypsum core, as well as glass fibers in amounts required prevent the shrinkage of its gypsum panels under high temperature conditions.

Other efforts also have been made to increase the strength and structural integrity of gypsum panels and reduce panel weight by various means. *See,* for example, US Patents 7,731,794 and 7,736,720 and US Patent Application Publications 2007/0048490 A1, 2008/0090068 A1, and 2010/0139528 A1. However, such efforts have not been considered sufficient by themselves to make low weight panels sufficiently resistant to fire and high heat conditions.

In many applications the provision of such low weight gypsum panels with the ability to resist the effects of relatively high heat or fire conditions to delay the passage of heat levels through such panels for even an half an hour would be an important contribution to the art. However, it has been generally believed that appreciably reducing the density of the core in gypsum panels will both reduce the strength properties and structural integrity of the panels, and also will reduce their ability to delay passage of heat through the panels for even a half hour. More particularly, panels with expected low strength and structural integrity, and intentionally low gypsum content are of particular concern in these applications since they have been expected to be overly vulnerable to shrinkage forces and other stresses caused by contact with relatively high heat or fire conditions and ineffective in absorbing and blocking heat associated with such conditions.

Nevertheless, it is well-recognized that reducing a gypsum panel's weight makes it easier and more economical to transport and easier to handle and install. Therefore, if a low weight and hence low density gypsum panel could be prepared that performed well in applications requiring resistance to fire and extreme heat without relying on additives like vermiculite, clay, colloidal silica, or colloidal alumina, it would represent an important advance in the fire resistant gypsum panel art.

Finally, it is noted that in the absence of water resistant additives, when immersed in water, set gypsum absorbs up to 50% of its weight of water. And, when gypsum panels, including fire resistant gypsum panels, absorb water, they

swell, become deformed and lose strength which may degrade their fire-resistance properties. Low weight and density fire-resistant panels have far more air and/or water voids than conventional heavier fire-resistant panels. These voids would be expected to increase the rate and extent of water-uptake, making such low weight fire-resistant panels more water absorbent than conventional heavier fire-resistant panels.

Many attempts have been made in the past to improve the water resistance of gypsum panels generally. Various hydrocarbons, including wax, resins and asphalt have been added to the slurry used to make the panels in order to impart water resistance to the set panels. The use of siloxanes for this purpose is also well known.

Although the use of siloxanes in gypsum slurries is a useful means of imparting water resistance to finished panels by forming silicone resins *in situ,* siloxanes would not be expected to sufficiently protect low weight and density panels. Thus there is a need in the art for a method of producing low weight and density fire-resistant gypsum panels with improved water-resistance at reasonable cost by enhancing the water resistance normally imparted by siloxanes.

SUMMARY OF THE INVENTION

An illustrating low weight, low density gypsum panel not in accordance with this invention is an improvement on the teaching of earlier copending U.S. Patent Application No. 12/795,125. The invention of the ’125 application includes a slurry for forming low density gypsum panels which may include stucco, dispersant, a phosphate-containing component and pregelatinized starch. The dispersant can be present in an amount of about 0.1% - 3.0% by weight based on the weight of dry stucco. The pregelatinized starch can be present in an amount of at least about 0.5% by weight up to about 10% by weight based on the weight of dry stucco in the formulation. The phosphate-containing component can be present in an amount of at least about 0.12% by weight based on the weight of stucco. Other slurry additives can include accelerators, binders, paper or glass fibers and other known constituents. The invention also comprises the low weight, low density gypsum panels made with such slurries.

In some illustrating aspects not in accordane with the present invention a nominal 1,6 cm (5/8 inch) thick low weight, low density gypsum panel that is far lighter and less dense than nominal 1,6 cm (5/8 inch) thick gypsum panels typically used for construction applications, has the ability to delay passage of high heat levels through the panel for more than a half hour, and methods for making such panels. In some such aspects, the panel (core plus cover sheets) has a density of 430 to 592 kg/m$^3$ (about 27 to about 37 pounds per cubic foot ("pcf')), preferably 464 to 544 kg/m$^3$ (about 29 to about 34 pcf), and more preferably 480 to 512 kg/m$^3$ (about 30 to about 32 pcf), disposed between two substantially parallel cover sheets. In such aspects, the weight of an approximately 1,6 cm (5/8 inch thick) panel of the invention is less than about 1900 lb/msf, preferably less than 8,5 kg/m$^3$ (about 1740 lb/msf) and more preferably less than 8 kg/m$^3$ about 1640 lb/msf.

In still other illustrating aspects, the formulation for a low weight and density panels not in accordance with the invention, and the methods for making them, provide gypsum panels with the above mentioned fire resistance properties, a density less than about less than 592 kg/m$^3$ (about 37 pcf), preferably less than 544 kg/m$^3$ (about 34 pcf) and more preferably less than 512 kg/m$^3$ (about 32 pcf), and nail pull resistance that satisfies the standards of ASTM C 1396/C 1396/M-09. More particularly, in embodiments of the invention such panels have a nail-pull resistance of at least 39,5 kg (87 lb).

In yet other illustrating aspects not in accordance with the invention, a set gypsum core composition for a nominal 1,6 cm (5/8 inch) fire rated panel is provided using a gypsum-containing slurry comprising at least water, stucco, and the other components identified below. In one such embodiment, the set gypsum core has a density of from 400 to 576 kg/m$^3$ (about 25 to about 36 pcf), and the core comprises stucco in an amount from 5 to 7,3 kg/m$^2$ (about 1040 lbs/msf to about 1490 lbs/msf); pregelatinized starch from about 0.3% to about 4% by weight of the stucco; mineral, glass or carbon fiber from about 0.1% to about 0.3% by weight of the stucco, and phosphate from about 0.15% to about 0.5% by weight of the stucco. (Unless otherwise stated, the percentages of the component of the gypsum core are stated by weight based on the weight of the stucco used to prepare the core slurry).

In other illustrating aspects, a gypsum core not in accordance with the panel of the invention has a density of from 430 to 528 kg/m$^3$ (about 27 to about 33 pounds per cubic foot), and a set gypsum core weight from 6,4 to 7,9 kg/m$^2$ (about 1315 to about 1610 pounds lb/msf). In such aspects, the gypsum core also comprises about 0.5% to about 2.0% pregelatinized starch; about 0.1%, to about 0.3% mineral, glass or carbon fiber; stucco, and about 0.01% to about 0.15% phosphate.

The present invention also includes the preparation and use of gypsum panels having a nominal 1,9 cm (¾ inch) thickness. Such panels will have panel constituent levels at about 120% of the values set forth above. Also, their ability to resist fire and high heat conditions will be at a level of at least about 120% of that of the nominal 1,6 cm (5/8 inch) thick panels. Other aspects and variations of the panels of the invention and core formulations are discussed herein below.

Other conventional additives also can be employed in each of the aspects of the core slurries and gypsum core compositions disclosed herein, in customary amounts, to impart desirable properties to the core and to facilitate their

manufacture. Examples of such additives are set accelerators, set retarders, dehydration inhibitors, binders, adhesives, dispersing aids, leveling or nonleveling agents, thickeners, bactericides, fungicides, pH adjusters, colorants, water repellants, fillers and mixtures thereof.

In the above mentioned aspects and other aspects of the panels of the invention disclosed herein, and the methods of making the same, aqueous foam is added to the core slurry in an amount effective to provide the desired gypsum core densities, using methods further discussed below. The addition of the foam component to the core slurry results in a distribution of voids and void sizes that contribute to one or more panel and/or core strength properties. Similarly, additional slurry layers, strips or ribbons comprising gypsum and other additives (which may have an increased density relative to other portions of the core) may be applied to the first or second cover sheets to provide specific properties to the finished panel, such as hardened edges or a hardened panel face.

Another illustrating aspect not in accordance with the invention comprises a method of making gypsum panels that are able to delay passage of heat levels through the panels for about a half hour or more where the set gypsum core component is formed from a calcined gypsum-containing aqueous slurry. In this aspect, the slurry comprises pregelatinized starch, dispersants, phosphates, mineral/glass/carbon fibers, foam, and other additives, stucco and water at a water/stucco weight ratio of about 0.6 to about 1.2, preferably about 0.8 to about 1.0, and more preferably about 0.9. The core slurry is then deposited as a continuous ribbon on and distributed over a continuous web of a first cover sheet. A continuous web of a second cover sheet is then placed over the deposited slurry to form a generally continuous gypsum panel of a desired approximate 1,6 cm (or 1,9 cm) (5/8 inch (or 3/4 inch)) thickness. The generally continuous gypsum panel is cut into individual panels of a desired length after the calcined gypsum-containing slurry has hardened (by hydration of the calcined gypsum to form a continuous matrix of set gypsum) sufficiently for cutting, and the resulting gypsum panels are dried.

The need for a catalyst and a method of producing fire resistant gypsum panels with improved water-resistance at reasonable cost is met or exceeded by illustrating embodiments in which the polymerization of siloxane is accelerated and in some cases the amount of siloxane needed to meet the specifications of ASTM 1398 can be reduced.

More specifically, polymerization of siloxane is improved using a slurry that includes stucco, Class C fly ash, magnesium oxide, an emulsion of siloxane and water, and greater than 2.0% by weight based on the weight of the stucco of pregelatinized starch. This slurry is used in a method of making water-resistant/fire resistant gypsum panels that includes making a slurry of an emulsion of siloxane, pregelatinized starch and water, then combining the slurry with a dry mixture of stucco, magnesium oxide and Class C fly ash. The slurry is then used to manufacture the gypsum panels as described earlier. The resulting product is useful for making a fire-resistant water-resistant gypsum panel having a core that includes interwoven matrices of calcium sulfate dihydrate crystals and a silicone resin, where the interwoven matrices have dispersed throughout them a catalyst comprising magnesium oxide and components from a Class C fly ash.

The mixture of magnesium oxide and Class C fly ash catalyzes the polymerization of siloxane to accelerate development of water-resistance in product made from the slurry. Fire resistant/water-resistant gypsum panels made in this way need not be stored for lengthy periods of time awaiting completion of the polymerization reactions of the siloxane.

Use of this catalyst also increases the extent of the reaction, leading to improved water-resistance. Water absorption of less than 5% by weight is attainable using the fly ash and magnesia combination. Thus, in addition to causing the polymerization reaction to accelerate, this catalyst also allows the siloxane to polymerize more completely allowing the amount of siloxane to be reduced in some cases. Since the siloxane is one of the more expensive panel additives, reduction in the usage level leads to a savings in the cost of the raw materials.

Another advantage of the present invention is the dimensional stability of the panels. Some compounds used to catalyze this reaction result in significant expansion as the panels dry. As the interior of the panels expands, it causes cracking in the exterior surface, damaging it. Use of fly ash and magnesium oxide results in very little expansion and very little cracking in the finished panels. It has also been unexpectedly found that the polymerized silicone resin lessens shrinkage of the panel under high heating conditions.

This combined fly ash and magnesia catalyst also allows for satisfactory polymerization using a wide range of magnesium oxide grades. While the prior art discloses only that dead-burned magnesia is suitable to act as a catalyst for siloxane polymerization, when combined with fly ash, even hard-burned or light-burned magnesium oxide may be used. This feature allows manufacturers of gypsum panels additional freedom in selection sources of magnesium oxide to be used in the slurry.

Finally, the greater than 2.0% by weight pregelatinized starch works in conjunction with the siloxane to achieve good water resistance. Although it is believed that the siloxane/high pregelatinized starch combination slows water entry through micropores on the panel edges first by blocking water entry and then, upon take-up of water by the starch by forming a highly viscous starch/water combination, we do not intend to be bound by this theory.

The above summary of the invention is not intended to limit the scope of the invention as understood by one of ordinary skill in the art. Other aspects and embodiments of the invention are disclosed below and in the Figures attached hereto.

BRIEF DESCRIPTION OF THE DRAWINGS

The figures listed and further discussed below, unless otherwise expressly stated, are exemplary of, and not limiting to, the invention disclosed herein.

FIGURE 1 is a plot of the maximum single sensor temperatures and a plot of the average of the sensor temperatures on the unexposed, unheated surface of a test assembly utilizing panels of the invention subjected to fire testing under the conditions of U419 as reported in Example 8 herein, as well as a plot of the ASTM 119 temperature curve used for the furnace temperatures on the exposed, heated side of the test assembly.

FIGURE 2 is an expanded plot of the data for the maximum single sensor and average sensor temperatures shown in Figure 1.

FIGURE 3 is a plot of the maximum single sensor temperatures and a plot of the average of the sensor temperatures on the unexposed, unheated surface of a test assembly utilizing panels of the invention subjected to fire testing under the conditions of U305 as reported in Example 9 herein, as well as a plot of the ASTM 119 temperature curve used for the furnace temperatures on the exposed, heated side of the test assembly.

FIGURE 4 is an expanded plot of the data for the maximum single sensor and average sensor temperatures shown in Figure 3.

DETAILED DESCRIPTION

Some illuastrating embodiments not in accordance with the invention of the copending applications, provide finished gypsum-containing products made from gypsum-containing slurries containing stucco, pregelatinized starch, and a naphthalenesulfonate dispersant. The naphthalenesulfonate dispersant is present in an amount of about 0.1% - 3.0% by weight based on the weight of dry stucco. The pregelatinized starch is present in an amount of at least about 0.5% by weight up to about 10% by weight based on the weight of dry stucco in the formulation. Other ingredients that may be used in the slurry include binders, paper fiber, glass fiber, and accelerators. A soap foam is normally added to the newly formulated gypsum-containing slurries to reduce the density of the final gypsum-containing product, for example, gypsum panels.

A combination of from about 0.5% by weight up to about 10% by weight pregelatinized starch, from about 0.1% by weight up to about 3.0% by weight naphthalenesulfonate dispersant, and a minimum of at least about 0.12% by weight up to about 0.4% by weight of the phosphate-containing component (all based on the weight of dry stucco used in the gypsum slurry) unexpectedly and significantly increases the fluidity of the gypsum slurry. This substantially reduces the amount of water required to produce a gypsum slurry with sufficient flowability to be used in making gypsum-containing products such as gypsum panels. The level of trimetaphosphate salt, which is at least about twice that of standard formulations (as sodium trimetaphosphate), is believed to boost the dispersant activity of the naphthalenesulfonate dispersant.

The naphthalenesulfonate dispersants used in the copending applications include polynaphthalenesulfonic acid and its salts (polynaphthalenesulfonates) and derivatives, which are condensation products of naphthalenesulfonic acids and formaldehyde. Particularly desirable polynaphthalenesulfonates include sodium and calcium naphthalenesulfonate. The average molecular weight of the naphthalenesulfonates can range from about 3,000 to 27,000, although it is preferred that the molecular weight be about 8,000 to 10,000. At a given solid% aqueous solution, a higher molecular weight dispersant has higher viscosity, and generates a higher water demand in the formulation, than a lower molecular weight dispersant. Useful naphthalenesulfonates include DILOFLO, available from GEO Specialty Chemicals, Cleveland, Ohio; DAXAD, available from Hampshire Chemical Corp., Lexington, Massachusetts; and LOMAR D, available from GEO Specialty Chemicals, Lafayette, Indiana. The naphthalenesulfonates are preferably used as aqueous solutions in the range 35-55% by weight solids content, for example. It is most preferred to use the naphthalenesulfonates in the form of an aqueous solution, for example, in the range of about 40-45% by weight solids content. Alternatively, where appropriate, the naphthalenesulfonates can be used in dry solid or powder form, such as LOMAR D, for example.

The polynaphthalenesulfonates useful in the present invention have the general structure (I):

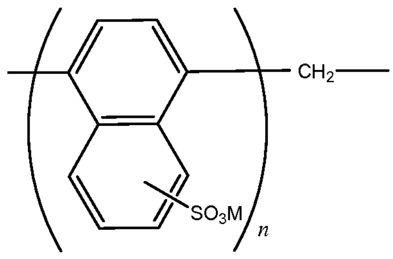

(I)

wherein n is >2, and wherein M is sodium, potassium, calcium, and the like.

The naphthalenesulfonate dispersant, preferably as an about 45% by weight solution in water, may be used in a range of from about 0.5% to about 3.0% by weight based on the weight of dry stucco used in the gypsum composite formulation. A more preferred range of naphthalenesulfonate dispersant is from about 0.5% to about 2.0% by weight based on the weight of dry stucco, and a most preferred range from about 0.7% to about 2.0% by weight based on the weight of dry stucco. In contrast, known gypsum panels contain this dispersant at levels of about 0.4% by weight, or less, based on the weight of dry stucco.

Stated in an another way, the naphthalenesulfonate dispersant, on a dry weight basis, may be used in a range from about 0.1% to about 1.5% by weight based of the weight of dry stucco used in the gypsum composite formulation. A more preferred range of naphthalenesulfonate dispersant, on a dry solids basis, is from about 0.25% to about 0.7% by weight based on the weight of dry stucco, and a most preferred range (on a dry solids basis) from about 0.3% to about 0.7% by weight based on the weight of dry stucco.

The gypsum-containing slurry of the copending applications can contain a phosphate-containing component, such as trimetaphosphate salt, for example, sodium trimetaphosphate. Any suitable water-soluble metaphosphate or polyphosphate can be used as the phosphate-containing component in accordance with the present invention. It is preferred that a trimetaphosphate salt be used, including double salts, that is trimetaphosphate salts having two cations. Particularly useful trimetaphosphate salts include sodium trimetaphosphate, potassium trimetaphosphate, lithium trimetaphosphate, ammonium trimetaphosphate, and the like, or combinations thereof. A preferred trimetaphosphate salt is sodium trimetaphosphate. It is preferred to use the trimetaphosphate salt as an aqueous solution, for example, in the range of about 10-15% by weight solids content. Other cyclic or acyclic polyphosphates can also be used, as described in U.S. Patent No. 6,409,825 to Yu et al.

Sodium trimetaphosphate is a known additive in gypsum-containing compositions, although it is generally used in a range of from about 0.05% to about 0.08% by weight based on the weight of dry stucco used in the gypsum slurry. In the embodiments of the present invention, sodium trimetaphosphate (or other water-soluble metaphosphate or polyphosphate) can be present in the range of from about 0.12% to about 0.4% by weight based on the weight of dry stucco used in the gypsum composite formulation. A preferred range of sodium trimetaphosphate (or other water-soluble metaphosphate or polyphosphate) is from about 0.12% to about 0.3% by weight based on the weight of dry stucco used in the gypsum composite formulation.

There are two forms of stucco, alpha and beta. These two types of stucco are produced by different means of calcination. In the present inventions either the beta or the alpha form of stucco may be used.

Starches, including pregelatinized starch in particular, must be used in gypsum-containing slurries prepared in accordance with the copending applications. A preferred pregelatinized starch is pregelatinized corn starch, for example pregelatinized corn flour available from Bunge Milling, St. Louis, Missouri, having the following typical analysis: moisture 7.5%, protein 8.0%, oil 0.5%, crude fiber 0.5%, ash 0.3%; having a green strength of 0.48 psi; and having a loose bulk density of 560 kg/$m^3$ (35.0 lb/$ft^3$). Pregelatinized corn starch should be used in an amount of at least about 0.5% by weight up to about 10% by weight, based on the weight of dry stucco used in the gypsum-containing slurry.

The present inventors further discovered that an unexpected increase in dry strength (particularly in gypsum panels) can be obtained by using at least about 0.5% by weight up to about 10% by weight pregelatinized starch (preferably pregelatinized corn starch) in the presence of about 0.1% by weight to 3.0% by weight naphthalenesulfonate dispersant (starch and naphthalenesulfonate levels based on the weight of dry stucco present in the formulation). This unexpected result can be obtained whether or not water-soluble metaphosphate or polyphosphate is present.

In addition, it was unexpectedly been found that pregelatinized starch can be used at levels of at least 49 g/$m^2$ (about 10 lb/MSF), or more, in the dried gypsum panels, yet high strength and low weight can be achieved. Levels as high as 171 to 220 g/$m^2$ (35-45 lb/MSF) pregelatinized starch in the gypsum panels have been shown to be effective.

Other useful starches include acid-modified starches, such as acid-modified corn flour, available as HI-BOND from Bunge Milling, St. Louis, Missouri. This starch has the following typical analysis: moisture 10.0%, oil 1.4%, solubles

17.0%, alkaline fluidity 98.0%, loose bulk density 30 lb/ft$^3$, and a 20% slurry producing a pH of 4.3. Another useful starch is non-pregelatinized wheat starch, such as ECOSOL-45, available from ADM/Ogilvie, Montreal, Quebec, Canada.

A further unexpected result may be achieved when the naphthalenesulfonate dispersant trimetaphosphate salt combination is combined with pregelatinized corn starch, and optionally, paper fiber or glass fiber. Gypsum panels made from formulations containing these three ingredients have increased strength and reduced weight, and are more economically desirable due to the reduced water requirements in their manufacture.

Accelerators can be used in the gypsum-containing compositions of the present invention, as described in U.S. Patent No. 6,409,825 to Yu et al. One desirable heat resistant accelerator (HRA) can be made from the dry grinding of landplaster (calcium sulfate dihydrate). Small amounts of additives (normally about 5% by weight) such as sugar, dextrose, boric acid, and starch can be used to make this HRA. Sugar, or dextrose, is currently preferred. Another useful accelerator is "climate stabilized accelerator" or "climate stable accelerator," (CSA) as described in U.S. Patent No. 3,573,947.

The illustrating aspects described below are not intended to be exhaustive or to limit the invention to the specific compositions, assemblies, methods and operations disclosed herein. Rather, the described aspects and embodiments of the invention have been chosen to explain the principles of the invention and its application, operation and use in order to best enable those skilled in the art to follow its teachings.

The present invention provides combinations of stucco and other noted ingredients, examples of which are set forth in Table I below. These formulations provide fire resistant, low weight and density gypsum panels with desired fire resistance properties not previously believed achievable by gypsum panels of such low weights and densities. The panels of the invention also provide nail-pull resistance suitable for a variety of construction purposes, and, in some aspects, such properties are comparable to significantly heavier, denser commercial fire rated panels. In yet other aspects, when used in wall or other assemblies, such assemblies have fire testing performance comparable to assemblies made with heavier, denser commercial fire rated panels.

According to the present invention, the formulation and method of the present invention provides 1,6 cm (5/8 inch thick) gypsum panels with a panel density (core plus cover sheets) of 430 to 592 kg/m$^3$ (about 27 to about 37 pcf). In other illustrating preferred aspects not n accordance with the present invention, the panel densities are from 464 to 544 kg/m$^3$ (about 29 pcf to about 34 pcf) or from 480 to 512 kg/m$^3$ (about 30 to about 32 pcf). Such panels of the invention provide fire resistance properties comparable to much heavier and denser gypsum panels.

In another illustrating aspect not in accordance with the present invention, a method is provided for making fire resistant gypsum panels by preparing a calcined gypsum containing aqueous slurry with the components discussed herein, where the calcined gypsum (also referred to as stucco), and water are used to create an aqueous slurry at a preferred water/stucco weight ratio of about 0.6 to about 1.2 in one aspect, about 0.8 to about 1.0 in another aspect, and about 0.9 in yet another aspect. The slurry is deposited as a continuous ribbon on a continuous cover sheet web of paper, unwoven fiberglass, or other fibrous materials or combination of fibrous materials. A second such continuous cover sheet is then placed over the deposited slurry ribbon to form a continuous gypsum panel of the desired thickness and width. The continuous gypsum panel is cut to a desired length after the calcined gypsum-containing slurry has hardened (by hydration of the calcined gypsum to form a continuous matrix of set gypsum) sufficiently for cutting, and the resulting gypsum panels are dried. The dried panels, in addition, may be subject to further cutting, shaping and trimming steps.

In other illustrating aspects not in accordance with the present invention, a higher density gypsum layer may be formed at or about the first cover sheet and/or along the peripheral edges of the cover sheet. The higher density layer typically provides beneficial properties to the panel surfaces, such as increased hardness, improved nail pull strength etc. The higher density along the peripheral edges of the cover sheet typically provides improved edge hardness and other beneficial properties. In other aspects, a higher density layer is applied to either cover sheets, or the equivalent portions of the core/cover sheet construction.

Typically, the higher density layers are applied using conventional techniques such as by applying coatings to one or both of the cover layers before or in close proximity of the deposition of the core layer on the first cover sheet or the application of the second cover sheet over the core slurry layer. Similarly, the peripheral higher density layer may be applied as a strip or narrow ribbon of gypsum slurry (with a density differing from that of the core slurry) to the peripheral edges of the first cover sheet before or in proximity to the deposition of the core slurry on the first sheet. In some of such aspects, the higher density layers comprise about 3% to about 4% of the board weight.

In one illustrating aspect a low weight and density, fire resistant 1,6 cm (5/8 inch) thick gypsum panel is provided suitable for use as wallboard, ceiling board or in other construction applications (such as exterior sheathing, roofing material, etc). The cover sheets also may be coated with water or abuse resistant coatings or, in some applications, gypsum, cementations materials, acrylic materials or other coatings suitable for specific construction needs. The panels also may be formed in a variety of dimensions suitable for standard, non-standard, or custom applications. Examples of such panels are nominal four feet wide panels having a nominal length of eight feet, ten and twelve feet typical of those used for building construction purposes.

The core density and overall density of the low weight, fire resistant panels is a significant contributor to the

overall weight of the panels relative to conventional panels with similar with dimensions. Thus, for 1,6 cm (5/8 inch) thick, panels, the panel weights would be 6,7 to 9,3 kg/$m^2$ (about 1380 lb/msf to about 1900 lb/msf), preferably 7,3 to 8,5 kg/$m^2$ (about 1490 lb/msf to about 1740 lb/msf), and most preferably 7,5 to 8 kg/$m^2$ (about 1540 lb/msf to about 1640 lb/msf). For 1,9 cm (¾ inch) panel thicknesses, the weight of the panels will be about 120% of the weights of the 1,6 cm (5/8 inch) panels.

The following table sets forth exemplary illustrating formulations for the low weight and density, fire resistant nominal 1,6 cm (5/8 inch) gypsum panels not in accordance with the present invention.

**Table I: Exemplary Formulations for the Low Weight and Density, Fire Resistant Nominal 1,6 cm (5/8 Inch) Gypsum Panels of the Invention**

| Component | Core Density Of About 25 to About 36 pcf | Core Density Of About 27 to About 33 pcf | Core Density Of About 28 to About 30 pcf |
|---|---|---|---|
| Stucco (lb/msf) (at least 95% gypsum) | about 1040 to about 1490 | about 1120 to about 1370 | about 1160 to about 1245 |
| Set gypsum (lb/msf) | about 1220 to about 1750 | about 1315 to about 1610 | about 1360 to about 1460 |
| Pregelatinized Starch (% by weight of stucco) | about 0.3 to about 4.0 | about 0.5 to about 2.0 | about 1.5 to about 1.8 |
| Phosphate (% by weight of stucco) | about 0.15 to about 0.5 | about 0.10 to about 0.15 | about 0.10 to about 0.15 |
| Dispersant (% by weight of stucco) | about 1.5 to about 0.3 | about 1.2 to about 0.5 | about 1.0 to about 0.75 |
| Mineral, Glass, or Carbon fiber (% by weight of stucco) | about 0.1 to about 0.3 | about 0.1 to about 0.3 | about 0.1 to about 0.3 |
| Manila Paper First Cover Sheets (lb/msf) | about 40 to about 60 | about 45 to about 55 | about 48 to about 53 |
| Board Density (pcf) (core and cover sheets) | about 27 to about 37 | about 29 to about 34 | about 30 to about 32 |
| Board Weight (lb/msf) | about 1380 to about 1900 | about 1490 to about 1740 | about 1540 to about 1640 |

Other conventional additives can be employed in the practice of the present invention in customary amounts to impart desirable properties and to facilitate manufacturing. Example of such additives are aqueous foams, set accelerators, set retarders, dehydration inhibitors, binders, adhesives, dispersing aids, leveling or nonleveling agents, thickeners, bactericides, fungicides, pH adjusters, colorants, water repellants, fillers and mixtures thereof.

In one aspect, utilizing one or more formulations within those disclosed in Table I, the present invention provides panels, and methods for making same, configured as low weight and density, nominally 1,6 cm 5/8 inch thick for gypsum panels that will meet or exceed a 30 minute fire rating pursuant to the fire containment and structural integrity requirements of appropriate testing protocols. Similar results may be achieved utilizing other formulations consistent with the approach described herein.

The combination of low weight, fire resistance, and strength and structural characteristics is due, it is believed, to the unexpected results from the combination of the above components, each of which is discussed in greater detail below.

**Stucco.** In each aspect of the invention, the stucco (or calcined gypsum) component used to form the crystalline matrix of the gypsum panel core typically comprises beta calcium sulfate hemihydrate, water-soluble calcium sulfate anhydrite, alpha calcium sulfate hemihydrate, or mixtures of any or all of these, from natural or synthetic sources. In some aspects, the stucco may include non-gypsum minerals, such as minor amounts of clays or other components that are associated with the gypsum source or are added during the calicination, processing and/or delivery of the stucco to the mixer.

By way of example, the amounts of stucco referenced in Table I assumes that the gypsum source has at least a 95% purity. Accordingly, the components, and their relative amounts, such as those mentioned in Table I above, used to form the core slurry may be varied or modified depending on the stucco source, purity and content. For example, the composition of the gypsum core slurry may be modified for different stucco compositions depending on the gypsum

purity, the natural or synthetic source for the gypsum, the stucco water content, the stucco clay content, etc.

**Starch.** In one important aspect of the panels of the invention, and the methods for preparing such panels, the core slurry formulation, such as mentioned in Table I above, includes a pregelatinized starch. Raw starch is pregelatinized by cooking the starch in water at temperatures of at least 85°C (185°F) or by other well known methods for causing gel formation in the starch utilized in the panel core. The starch may be incorporated in the core slurry in a dry form, a predispersed in liquid form or combinations of both. In a dry form, it may be added to the core slurry mixer with other dry ingredients or in a separate addition procedure, step or stage. In the predispersed form, it may be added with other liquid ingredients, such as gauging water, or in a separate addition procedure, step or stage.

Some examples of readily available pregelatinized starches that may be used in the practice of the present invention are (as identified by their commercial names): PCF1000 starch, available from Lauhoff Grain Co.; and AMERIKOR 818 and HQM PREGEL starches, both available from Archer Daniels Midland Co. In one important aspect, the starch component includes at least pregelatinized corn starch, such as pregelatinized corn flour available from Bunge Milling, St. Louis, Missouri. Such pregelatinized starches have the following typical characteristics: moisture 7.5%, protein 8.0%, oil 0.5%, crude fiber 0.5%, ash 0.3%; having a green strength of 0.48 psi; and having a loose bulk density of 560 $kg/m^3$ (35.0 $lb/ft^3$).

**Fibers.** In the aspects of the invention incorporating fibers such as mentioned in Table I above, and the methods for preparing such panels, the fibers may include mineral fibers, glass and/or carbon fibers, and mixtures of such fibers, as well as other comparable fibers providing comparable benefits to the panel. In one important aspect, glass fibers are incorporated in the gypsum core slurry and resulting crystalline core structure. The glass fibers in such aspects may have an average length of 1,27 to 1,9 cm (about 0.5 to about 0.75 inches) and a diameter of about 11 to about 17 microns. In other aspects, such glass fibers may have an average length of 1,27 to 1,6 cm (about 0.5 to about 0.675 inches) and a diameter of about 13 to about 16 microns. In yet other aspects, E-glass fibers are utilized having a softening point above about 800° C and one such fiber type is Advantex® glass fibers (available from Owens Corning) having a softening point above at least about 900° C. Mineral wool or carbon fibers such as those know to those of ordinary skill may be used in place of or in combination with glass fibers, such as those mentioned above.

**Phosphate.** In one important aspect of the panels of the invention and the methods for preparing such panels, a phosphate-containing component comprising a phosphate salt or other source of phosphate ions is added to the gypsum slurry used to produce the panel gypsum core. The use of such phosphates contributes to providing a gypsum core with increased strength, resistance to permanent deformation (e.g., sag resistance), dimensional stability, and increased strength of the panels when in a wet state, compared with set gypsum formed from a mixture containing no phosphate. In many such aspects, the phosphate source is added in amounts to provide dimensional stability to the panel and panel core while the gypsum hemihydrite in the core hydrates and forms the gypsum dihydrite crystalline core structure (for example during the time between the forming plate and the kiln section of the formation process). Additionally, it is noted that to the extent that the added phosphate acts as a retarder, an appropriate accelerator can be added at the required level to overcome any adverse retarding effects of the phosphate.

The phosphate-containing components useful in the present invention are water-soluble and are in the form of an ion, a salt, or an acid, namely, condensed phosphoric acids, each of which comprises 2 or more phosphoric acid units; salts or ions of condensed phosphates, each of which comprises 2 or more phosphate units; and monobasic salts or monovalent ions of orthophosphates, such as described, for example, in US Patents 6,342,284; 6,632,550; and 6,815,049. Suitable examples of such classes of phosphates will be apparent to those skilled in the art. For example, any suitable monobasic orthophosphate-containing compound can be utilized in the practice of the invention, including, but not limited to, monoammonium phosphate, monosodium phosphate, monopotassium phosphate, and combinations thereof. A preferred monobasic phosphate salt is monopotassium phosphate.

Similarly, any suitable water-soluble polyphosphate salt can be used in accordance with the present invention. The polyphosphate can be cyclic or acyclic. Exemplary cyclic polyphosphates include, for example, trimetaphosphate salts and tetrametaphosphate salts. The trimetaphosphate salt can be selected, for example, from sodium trimetaphosphate (also referred to herein as STMP), potassium trimetaphosphate, lithium trimetaphosphate, ammonium trimetaphosphate, and the like, or combinations thereof.

Also, any suitable water-soluble acyclic polyphosphate salt can be utilized in accordance with the present invention. The acyclic polyphosphate salt has at least two phosphate units. By way of example, suitable acyclic polyphosphate salts in accordance with the present invention include, but are not limited to, pyrophosphates, tripolyphosphates, sodium hexametaphosphate having from about 6 to about 27 repeating phosphate units, potassium hexametaphosphate having from about 6 to about 27 repeating phosphate units, ammonium hexametaphosphate having from about 6 to about 27 repeating phosphate units, and combinations thereof. A preferred acyclic polyphosphate salt pursuant to the present invention is commercially available as CALGON.RTM. from ICL performance Products LP, St. Louis, Missouri, which is a sodium hexametaphosphate having from about 6 to about 27 repeating phosphate units.

Preferably, the phosphate-containing compound is selected from the group consisting of sodium trimetaphosphate having the molecular formula $(NaPO_3)_3$, sodium hexametaphosphate having 6-27 repeating phosphate units and

having the molecular formula $Na_{n+2}P_nO_{3n+1}$ wherein n=6-27, tetrapotassium pyrophosphate having the molecular formula $K_4P_2O_7$, trisodium dipotassium tripolyphosphate having the molecular formula $Na_3K_2P_3O_{10}$, sodium tripolyphosphate having the molecular formula $Na_5P_3O_{10}$, tetrasodium pyrophosphate having the molecular formula $Na_4P_2O_7$, aluminum trimetaphosphate having the molecular formula $Al(PO_3)_3$, sodium acid pyrophosphate having the molecular formula $Na_2H_2P_2O_7$, ammonium polyphosphate having 1000-3000 repeating phosphate units and having the molecular formula $(NH_4)_{n+2}P_nO_{3n+1}$ wherein n=1000-3000, and polyphosphoric acid having 2 or more repeating phosphoric acid units and having the molecular formula $H_n+_2P_nO_{3n+1}$ wherein n is 2 or more. Sodium trimetaphosphate is most preferred and is commercially available from ICL performance Products LP, St. Louis, Missouri.

The phosphates usually are added in a dry form and/or an aqueous solution liquid form, with the dry ingredients added to the core slurry mixer, with the liquid ingredients added to the mixer, or in other stages or procedures.

**Dispersants.** In another aspect of the low weight and density, fire resistant panels of the invention and the methods for preparing such panels, dispersants may be included in the gypsum core slurry. The dispersants may be added in a dry form with other dry ingredients and/or an aqueous solution liquid form with other liquid ingredients in the core slurry mixing operation, or in other steps or procedures.

In one important aspect, such dispersants may include naphthalenesulfonates, such as polynaphthalenesulfonic acid and its salts (polynaphthalenesulfonates) and derivatives, which are condensation products of naphthalenesulfonic acids and formaldehyde. Such desirable polynaphthalenesulfonates include sodium and calcium naphthalenesulfonate. The average molecular weight of the naphthalenesulfonates can range from about 3,000 to 27,000, although it is preferred that the molecular weight be about 8,000 to 10,000. At a given solids percentage aqueous solution, a higher molecular weight dispersant has higher viscosity, and generates a higher water demand in the formulation, than a lower molecular weight dispersant.

Useful naphthalenesulfonates include DILOFLO, available from GEO Specialty Chemicals, Cleveland, Ohio; DAXAD, available from Hampshire Chemical Corp., Lexington, Massachusetts; and LOMAR D, available from GEO Specialty Chemicals, Lafayette, Indiana. The naphthalenesulfonates are preferably used as aqueous solutions in the range 35-55% by weight solids content, for example. It is most preferred to use the naphthalenesulfonates in the form of an aqueous solution, for example, in the range of about 40-45% by weight solids content. Alternatively, where appropriate, the naphthalenesulfonates can be used in dry solid or powder form, such as LOMAR D, for example.

Alternatively, in other aspects of the invention, polycarboxylate dispersants useful for improving fluidity in gypsum slurries may be used. A number of polycarboxylate dispersants, particularly polycarboxylic ethers, are preferred types of dispersants. One of the preferred class of dispersants used in the slurry includes two repeating units. It is described further in U.S. Patent 7,767,019, entitled "Gypsum Products Utilizing a Two-Repeating Unit System and Process for Making Them" . These dispersants are products of BASF Construction Polymers, GmbH (Trostberg Germany) and are supplied by BASF Construction Polymers, Inc. (Kennesaw, GA) (hereafter "BASF") and are hereafter referenced as the "PCE211-Type Dispersants." A particularly useful dispersant of the PCE211-Type Dispersants is designated PCE211 (hereafter "211"). Other polymers in this series useful in the present invention include PCE111. PCE211-Type dispersants are described more fully in U.S. Ser. No. 11/827,722 (Pub. No. US 2007/0255032A1) filed July 13, 2007, entitled "Polyether-Containing Copolymer".

The molecular weight of one type of such PCE211 Type dispersants may be from about 20,000 to about 60,000 Daltons. It has been found that the lower molecular weight dispersants cause less retardation of set time than dispersants having a molecular weight greater than 60,000 Daltons. Generally longer side chain length, which results in an increase in overall molecular weight, provides better dispensability. However, tests with gypsum indicate that efficacy of the dispersant is reduced at molecular weights above 50,000 Daltons.

Another class of polycarboxylate compounds that are useful as dispersants in this invention is disclosed in U.S. Pat. No. 6,777,517, hereafter referenced as the "2641-Type Dispersant." PCE211-Type and 2641-Type dispersants are manufactured by BASF Construction Polymers, GmbH (Trostberg, Germany) and marketed in the United States by BASF Construction Polymers, Inc. (Kennesaw, Ga.). Preferred 2641-Type Dispersants are sold by BASF as MELFLUX 2641F, MELFLUX 2651F and MELFLUX 2500L dispersants.

Yet another preferred dispersant family is sold by BASF and referenced as "1641-Type Dispersants." This dispersant is more fully described in U.S. Pat. No. 5,798,425. A one of such dispersants is a 1641-Type Dispersant is marketed as MELFLUX 1641F dispersant by BASF. Other dispersants that can be used include other polycarboxylate ethers such as COATEX Ethacryl M, available from Coatex, Inc. of Chester, SC and lignosulfonates, or sulfonated lignin. Lignosulfonates are water-soluble anionic polyelectrolyte polymers, byproducts from the production of wood pulp using sulfite pulping. One example of a lignin useful in the invention is Marasperse C-21 available from Reed Lignin, Greenwich, Conn.

**Retarders/Accelerator.** Set retarders (up to about 2 lb/MSF (9.8 $g/m^2$)) or dry accelerators (up to about 35 lb/MSF (170 $g/m^2$)) may be added to some aspects of the core slurry to modify the rate at which the stucco hydration reactions take place. "CSA" is a set accelerator including 95% calcium sulfate dihydrate co-ground with 5% sugar and heated to 250° F (1-21° C.) to caramelize the sugar. CSA is available from USG Corporation, Southard, Okla. plant, and

is made according to U.S. Pat. No. 3,573,947. Potassium sulfate is another preferred accelerator. HRA, which is a preferred accelaerator, is calcium sulfate dihydrate freshly ground with sugar at a ratio of about 5 to 25 pounds of sugar per 100 pounds of calcium sulfate dihydrate. It is further described in U.S. Pat. No. 2,078,199. Both of these are preferred accelerators.

Another accelerator, known as wet gypsum accelerator or WGA, is also a preferred accelerator. A description of the use of and a method for making wet gypsum accelerator are disclosed in U.S. Pat. No. 6,409,825. This accelerator includes at least one additive selected from the group consisting of an organic phosphonic compound, a phosphate-containing compound or mixtures thereof. This particular accelerator exhibits substantial longevity and maintains its effectiveness over time such that the wet gypsum accelerator can be made, stored, and even transported over long distances prior to use. The wet gypsum accelerator is used in amounts ranging from about 5 to about 80 pounds per thousand square feet (24.3 to 390 g/ $m^2$) of gypsum panel.

**Foam.** In another important aspect, foam may be introduced into the core slurry in amounts that provide the above mentioned reduced core density and panel weight. The introduction of foam in the core slurry in the proper amounts, formulations and process will produce a desired network and distribution of voids within the core of the final dried panels. This void structure permits the reduction of the gypsum and other core constituents and the core density and weight, while maintaining desired panel structural and strength properties. Examples of the use of foaming agents to produce desired void structures include those discussed in U.S. Patent No. 5,643,510. The approaches for adding foam to a core slurry are known in the art and one example of such an approach is discussed in U.S. Patent No. 5,683,635.

**Cover Sheets.** In some aspects of the invention, the first cover sheet comprises low porosity manila paper upon which the gypsum slurry is dispensed (which typically is exposed face of the panel when used in a construction application). Newsline may be used as the second cover sheet placed on the gypsum core slurry during the forming process (which typically is the concealed back surface of the panels when used construction applications. In other applications, unwoven fiberglass mats, sheet materials of other fibrous or non-fibrous materials, or combinations of paper and other fibrous materials may be used as one or both of the cover sheets.

In aspects using paper or similar cover sheets, the first cover sheet is a higher density and basis weight than the second coversheet. For example, in some aspects, the first cover sheet has a basis weight of 195 to 293 g/$m^2$ (about 40 to 60 lb/msf), and the second coversheet has a basis weight of 171 to 220 g/$m^2$ (about 35 to 45 lb/msf). The use of such heavy manila paper as the first cover sheet is preferred because it improves the nail pull and flexure properties of the panels in all applications and most particularly in ceiling applications.

The cover sheets may incorporate and may have added to their exposed surfaces, coatings of materials providing surfaces suitable for specific construction applications such as exterior sheathing, roofing, tile backing, etc.

**Siloxane.** Surprisingly the combination of greater than 2% by weight based on the weight of gypsum of pregelatinaized starch and at least about 0.4% and preferably at least about 0.7% by weight based on the weight of the gypsum of siloxane will produce gypsum panels with less than 5% water absorption. This is particularly surprising since reduced weight and density panels have far more air and/or water voids than conventional panels and these voids would be expected to make the low weight panels far more water absorbent. It has also been unexpectedly found that the polymerized silicone resin lessens shrinkage of the panel under high heating conditions.

The water resistance of gypsum based articles is improved by adding a polymerizable siloxane to the slurry used to make the gypsum based articles. Preferably, the siloxane is added in the form of an emulsion. The slurry is then shaped and dried under conditions which promote the polymerization of the siloxane to form a highly cross-linked silicone resin. A catalyst which promotes the polymerization of the siloxane to form a highly cross-linked silicone resin is preferably added to the gypsum slurry.

Preferably, the siloxane is generally a fluid linear hydrogen-modified siloxane, but can also be a cyclic hydrogen-modified siloxane. Such siloxanes are capable of forming highly cross-linked silicone resins. Such fluids are well known to those of ordinary skill in the art and are commercially available and are described in the patent literature. Typically, the linear hydrogen modified siloxanes useful in the practice of the present invention comprise those having a repeating unit of the general formula:

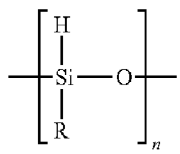

wherein R represents a saturated or unsaturated mono-valent hydrocarbon radical. In the preferred embodiments, R represents an alkyl group and most preferably R is a methyl group. During polymerization, the terminal groups are removed by condensation and siloxane groups are linked together to form the silicone resin. Cross-linking of the chains also occurs. The resulting silicone resin imparts water resistance to the gypsum matrix as it forms.

Preferably, a solventless methyl hydrogen siloxane fluid sold under the name SILRES BS 94 by Wacker-Chemie GmbH (Munich, Germany) will be used as the siloxane. The manufacturer indicates this product is a siloxane fluid containing no water or solvents. It is contemplated that about 0.3 to 1.0% of the BS 94 siloxane may be used, based on the weight of the dry ingredients. It is preferred to use from about 0.4 to about 0.8% of the siloxane based on the dry stucco weight.

The siloxane is formed into an emulsion or a stable suspension with water. A number of siloxane emulsions are contemplated for use in this slurry. Emulsions of siloxane in water are also available for purchase, but they may include emulsifying agents that tend to modify properties of the gypsum articles, such as the paper bond in gypsum panel products. Emulsions or stable suspensions prepared without the use of emulsifiers are therefore preferred. Preferably, the suspension will be formed *in situ* by mixing the siloxane fluid with water. It is essential that the siloxane suspension be stable until used and that it remain well dispersed under the conditions of the slurry. The siloxane suspension or emulsion must remain well dispersed in the presence of the optional additives, such as set accelerators, that may be present in the slurry. The siloxane suspension or emulsion must also remain stable through the steps in which the gypsum panels are formed as well. Preferably, the suspension remains stable for more than 40 minutes. More preferably, it remains stable for at least one hour. In the discussion and claims that follow, the term "emulsion" is intended to include true emulsions and suspensions that are stable at least until the stucco is 50% set.

While not wishing to be bound by theory, it is believed that water resistance develops when the siloxane cures within the formed panels and that the at least 2.0% by weight pregelatinized starch works in conjunction with the siloxane to slow water entry through micropores on the panel edges first by blocking water entry and then, upon take-up of water by the starch by forming a highly viscous starch/water combination.

The siloxane polymerization reaction proceeds slowly on its own, requiring that the panels be stored for a time sufficient to develop water-resistance prior to shipping. Catalysts are known to accelerate the polymerization reaction, reducing or eliminating the time needed to store gypsum panels as the water-resistance develops. Use of dead-burned magnesium oxide for siloxane polymerization is described in co-pending U.S. Ser. No. 10/917,177, entitled "Method of Making Water-Resistant Gypsum-Based Article". Dead-burned magnesium oxide is water-insoluble and interacts less with other components of the slurry. It accelerates curing of the siloxane and, in some cases, causes the siloxane to cure more completely. It is commercially available with a consistent composition. A particularly preferred source of dead-burned magnesium oxide is BAYMAG 96. It has a BET surface area of at least 0.3 m.sup.2/g. The loss on ignition is less than 0.1% by weight. The magnesium oxide is preferably used in amounts of about 0.1 to about 0.5% based on the dry stucco weight.

There are at least three grades of magnesium oxide on the market, depending on the calcination temperature. "Dead-burned" magnesium oxide is calcined between 1500°C and 2000°C, eliminating most, if not all, of the reactivity. MagChem P98-PV (Martin Marietta Magnesia Specialties, Bethesda, Md.) is an example of a "dead burned" magnesium oxide. BayMag 96 (Baymag, Inc. of Calgary, Alberta, Canada) and MagChem 10 (Martin Marietta Magnesia Specialties, Bethesda, Md.) are examples of "hard-burned" magnesia. "Hard-burned" magnesium oxide is calcined at temperatures from 1000°C to about 1500°C. It has a narrow range of reactivity, a high density, and is normally used in application where slow degradation or chemical reactivity is required, such as in animal feed and fertilizer. The third grade is "light-burn" or "caustic" magnesia, produced by calcining at temperatures of about 700°C to about 1000°C. This type of magnesia is used in a wide range of applications, including plastics, rubber, paper and pulp processing, steel boiler additives, adhesives and acid neutralization. Examples of light burned magnesia include BayMag 30, BayMag 40, and BayMag 30 (-325 Mesh) (BayMag, Inc. of Calgary, Alberta, Canada).

It has been discovered that preferred catalysts are made of a mixture of magnesium oxide and Class C fly ash. When combined in this manner, any of the grades of magnesium oxide are useful. However, dead-burned and hard-burned magnesium oxides are preferred due to reduced reactivity. The relatively high reactivity of magnesium oxides, can lead to cracking reactions which can produce hydrogen. As the hydrogen is generated, the product expands, causing cracks where the stucco has set. Expansion also causes breakdown of molds into which the stucco is poured, resulting in loss of detail and deformation of the product in one or more dimensions. Preferably, BayMag 96, MagChem P98-PV and MagChem 10 are the preferred sources of magnesium oxide. Preferably, the magnesium oxide and fly ash are added to the stucco prior to their addition to the gauging water. Dry components such as these are often added to the stucco as it moves along a conveyer to the mixer.

A preferred fly ash is a Class C fly ash. Class C hydraulic fly ash, or its equivalent, is the most preferred fly ash component. A typical composition of a Class C fly ash is shown in Table 1. High lime content fly ash, greater than 20% lime by weight, which is obtained from the processing of certain coals. ASTM designation C-618, describes the characteristics of Class C fly ash. A preferred Class C fly ash is supplied by Bayou Ash Inc., Big Cajun, II, L A. Preferably, fly ash is used in amounts of about 0.1% to about 5% based on the dry stucco weight. More preferably, the fly ash is used in amounts of about 0.2% to 1.5% based on the dry stucco weight.

Catalysis of the siloxane results in faster and more complete polymerization and cross-linking of siloxane to form the silicone resin. Hydration of the stucco forms an interlocking matrix of calcium sulfate dihydrate crystals. While

the gypsum matrix is forming, the siloxane molecules are also forming a silicone resin matrix. Since these are formed simultaneously, at least in part, the two matrices become intertwined in each other. Excess water and additives to the slurry, including the fly ash, magnesium oxide and additives described below, which were dispersed throughout the slurry, become dispersed throughout the matrices in the interstitial spaces to achieve water resistance throughout the panel core. The high level of pregelatinized starch works in conjunction with the siloxane to retard water entry along the more vulnerable edges of the panel.

In illustrating embodiments not in accordance with the present invention, a gypsum panel includes a set gypsum core between top and bottom cover sheets. The panel has a core density of 430 to 592 kg/$m^3$ (about 27 to about 37 pounds per cubic foot) and a Thermal Insulation Index of greater than about 17 minutes. In other such embodiments, the gypsum panel has a nominal thickness of 1,6 cm (about 0.625 inches). In still other such embodiments, the gypsum panel has a nominal thickness of 1,6 cm (about 0.625 inches) and a Thermal Insulation Index of at least about 18 minutes.

In illustrating embodiments not in accordance with the present invention, a fire resistant gypsum panel includes a set gypsum core between top and bottom cover sheets. The panel has a core density of 430 to 592 kg/$m^3$ (about 27 to about 37 pounds per cubic foot). The panel is effective to inhibit the transmission of heat through an assembly prepared and subjected to fire testing pursuant to UL U419 procedures having one surface exposed to a heat source and an opposite unheated surface such that the maximum single location temperature on the unheated surface is less than 213 °C (about 415° F) at about 30 minutes elapsed time when measured pursuant to UL U419. In other such embodiments, the fire resistant gypsum panel is effective to inhibit the transmission of heat through the assembly such that the average temperature on the unheated surface is less than 171 °C (about 340° F) at about 30 minutes elapsed time when measured pursuant to UL U419.

In illustrating embodiments not in accordance with the present invention, a fire resistant gypsum panel includes a set gypsum core between top and bottom cover sheets. The panel has a core density of 430 to 592 kg/$m^3$ (about 27 to about 37 pounds) per cubic foot. The panel is effective to inhibit the transmission of heat through an assembly prepared and subjected to fire testing pursuant to UL U305 procedures having one surface exposed to a heat source and an opposite unheated surface such that the maximum single location temperature on the unheated surface is less than 213 °C (about 415° F) at about 45 minutes elapsed time when measured pursuant to UL U305.

In other illustrating embodiments not in accordance with the present invention, the fire resistant gypsum panel is effective to inhibit the transmission of heat through the assembly such that the maximum single location temperature on the unheated surface is less than 132 °C (about 270° F) at about 45 minutes elapsed time when measured pursuant to UL U305. In still other such embodiments, the fire resistant gypsum panel is effective to inhibit the transmission of heat through the assembly such that the average temperature on the unheated surface is less than 171 °C (about 340° F) at about 45 minutes elapsed time when measured pursuant to UL U305. In still other such embodiments, the fire resistant gypsum panel is effective to inhibit the transmission of heat through the assembly such that the average temperature on the unheated surface is less than 118 °C (about 245° F) at about 45 minutes elapsed time when measured pursuant to UL U305.

According to the present invention, a gypsum panel has a density of 430 to 592 kg/$m^3$ (about 27 to about 37 pounds per cubic foot) and a Thermal Insulation Index greater than 17.0 minutes. The gypsum panel comprises: (a) 5,95 to 9,3 kg/$m^3$ (about 1220-1750 lb/msf) set gypsum; (b) about 0.3-4.0% by weight pregelatinized starch; (c) about 0.15-0.50% by weight of a phosphate-containing component; (d) about 0.3-1.5% by weight dispersant; (e) about 0.1-0.3% by weight mineral, glass or carbon fiber; and (f) foam voids in an amount effective to provide the specified panel density. The percentages by weight are based on the weight of the set gypsum and the kg/$m^2$ (lb/msf) are for a nominally 1,6 cm (0.625 inch) thick panel. In other illustrating embodiments not in accordance with the present invention, the lb/msf set gypsum are proportionally adjusted for a panel nominal thickness of from 1,6 to 1,9 cm (about 0.625 to about 0.75 inches).

In still other illustrating embodiments not in accordance with the present invention, the gypsum panel includes: (a) 6,4 to 7,8 kg/$m^2$ (about 1315-1610 lb/msf) set gypsum; (b) about 0.5-2.0% by weight pregelatinized starch; (c) about 0.10-0.15% by weight phosphate; (d) about 0.5-1.2% by weight dispersant; (e) about 0.1-0.3% by weight mineral, glass or carbon fiber; and (f) foam voids in an amount effective to provide the specified panel density. The percentages by weight are based on the weight of the set gypsum and the kg/$m^2$ (lb/msf) values are for a nominally 1,6 cm (5/8 inch) thick panel and subject to proportional adjustment for thicker or thinner panels.

In still other illustrating embodiments not in accordance with the present invention, the gypsum panel includes: (a) 6,6 to 7,1 kg/$m^2$ (about 1360-1460 lb/msf) set gypsum; (b) about 1.5-1.8% by weight pregelatinized starch; (c) about 0.10-0.15% by weight phosphate; (d) about 0.75-1.0% by weight dispersant; (e) about 0.1-0.3% by weight mineral, glass or carbon fiber; and (f) foam voids in an amount effective to provide the specified panel density. The percentages by weight are based on the weight of the set gypsum and the kg/$m^2$ (lb/msf) values are for a nominally 1,6 cm (5/8 inch) thick panel and subject to proportional adjustment for thicker or thinner panels.

In yet other illustrating embodiments not in accordance with the present invention, the gypsum panel includes paper cover sheets with a first such cover sheet having a weight of 195 to 293 g/$m^2$ (about 40-60 lb/msf). In other

embodiments, the density of the panel is 464 to 544 kg/$m^3$ (about 29 to about 34 pounds per cubic foot). In still other illustrating embodiments, the density of the panel is 480 to 512 kg/$m^3$ (about 30 to about 32 pounds per cubic foot).

In still other illustrating embodiments not in accordance with the present invention, the gypsum panel comprises at least 0.4% by weight siloxane based on the weight of the set gypsum. In some illustrating embodiments not in accordance with the present invention, the high temperature shrinkage of the panel is less than the high temperature shrinkage of a panel of the same constituent amounts without siloxane. In some embodiments, the gypsum panel comprises greater than 2% by weight pregelatinized starch. In some illustrating embodiments not in accordance with the present invention, the high temperature shrinkage of the panel is less than the high temperature shrinkage of a panel of the same constituent amounts without siloxane. In some embodiments, the high temperature shrinkage of the panel is about 50% of the high temperature shrinkage of a panel of the same constituent amounts without siloxane.

In other illustrating embodiments not in accordance with the present invention, the phosphate containing component is water-soluble and is chosen from the group consisting of a condensed phosphoric acid which comprises two or more phosphoric acid units, a salt or ion of a condensed phosphate which comprises two or more phosphate units, a monobasic salt or a monovalent ion of an orthophosphate, and combinations thereof. In some illustrating embodiments not in accordance with the present invention, the phosphate containing component comprises a cyclic polyphosphate.

In illustrating embodiments not in accordance with the present invention, an assembly of gypsum panels is mounted on metal supports. The gypsum panels comprise a set gypsum core between top and bottom cover sheets. The core has a density of 430 to 592 kg/$m^3$ (about 27 to 37 pounds per cubic foot) and provides the assembly at least a 30 minute fire rating under the UL U419 test procedures. In some illustrating embodiments not in accordance with the present invention, the gypsum panels of the assembly are mounted on wood supports, and the gypsum panels provide at least a 30 minute fire rating under the UL 305 test procedures.

In illustrating embodiments not in accordance with the present invention, a method for making fire resistant gypsum panel having a Thermal Insulation Index of at least 17.0 minutes comprises providing a slurry. The slurry has: (a) 5 to 7,3 kg/$m^2$ (about 1040-1490 lb/msf) stucco, (b) about 0.3-4.0% by weight pregelatinized starch, (c) about 0.15-0.50% by weight phosphate, (d) about 0.3-1.5% by weight dispersant, (e) about 0.1-0.3% by weight mineral, glass or carbon fiber, and (f) an amount of foam effective to provide a core density of 400 to 577 kg/$m^3$ (about 25 to about 36 pounds per cubic foot). The slurry is deposited onto a first cover sheet. The slurry is covered with a second cover sheet to form the panel. The panel is maintained at a predetermined nominal thickness until the core slurry is hydrated. The panel is cut to desired dimensions. The panel is dried. The percentages by weight are based on the weight of the stucco and the lb/msf values are for a nominally 1,6 cm (0.625 inch) thick panel.

In other illustrating embodiments not in accordance with the present invention, the lb/msf stucco in the method are proportionally adjusted for a panel nominal thickness of from 1,6 tro 1,9 cm (about 0.625 to about 0.75 inches). In still other illustrating embodiments not in accordance with the present invention, an assembly of the gypsum panels made by the method are mounted on metal supports. The assembly provides at least a 30 minute fire rating under the UL U419 test procedures.

EXAMPLES

The following examples further illustrate aspects . All values reported herein (e.g. weights, percentages, temperatures, dimensions, times, etc.) are subject to and include, the measurement variations and margins of error reflected in the data as well as that which typically encountered by one of ordinary skill in the art for the specific component, test, property or observation to which they relate.

**Example 1**

Sample Gypsum Slurry Formulations.

Gypsum slurry formulations are shown in Table 1 below. All values in Table 1 are expressed as weight percent based on the weight of dry stucco. Values in parentheses are dry weight in g (g/$m^2$) (pounds (lb/MSF)) for a nominally 1,27 cm (1/2 inch) thick panel).

TABLE 1

| Component | Formulation A | Formulation B |
|---|---|---|
| | | |
| Stucco in kg/$m^2$ (lb/MSF) | 3,6 (732) | 3,4 (704) |
| sodium trimetaphosphate | 0.20 (7,3 (1.50)) | 0.30 (10,45 (2.14)) |

(continued)

| Component | Formulation A | Formulation B |
|---|---|---|
| Dispersant (naphthalenesulfonate) | 0.18 (6,6 (1.35)) | 0.58[1] (19,77 (4.05)) |
| Pregelatinized starch | 2.7 (97,6 (20)) | 6.4 ((45)) |
| Board starch | 0.41 (14,6 (3.0)) | 0 |
| Heat resistant accelerator (HRA) | (73,2 (15)) | (73,2 (15)) |
| Glass fiber | 0.27 ((2.0)) | 0.28 (0,27 (2.0)) |
| Paper fiber | 0 | 0.99 (34,1 (7.0)) |
| Soap* | 0.03 (9,8 (0.192)) | 0.03 (0,9 (0.192)) |
| | | |
| Total Water in kg (lb.) | 365 (805) | 386 (852) |
| | | |
| Water / Stucco ratio | 1.10 | 1.21 |

*Used to pregenerate foam.
[1] 1.28% by weight as a 45% aqueous solution.

**Example 2**

Preparation of panels.

Sample gypsum panels (nominally 1,27 cm (about ½ inch) thick) were prepared in accordance with U.S. Patent Nos. 6,342,284 to Yu et al. and 6,632,550 to Yu et al. This includes the separate generation of foam and introduction of the foam into the slurry of the other ingredients as described in Example 5 of these patents.

Test results for gypsum panels made using the Formulations A and B of Example 1, and a control are shown in Table 2 below. As in this example and other examples below, nail pull resistance, core hardness, and flexural strength tests were performed according to ASTM C-473. Additionally, it is noted that typical gypsum panel is approximately 1,27 cm (½ inch) thick and has a weight of between 7,8 to 8,8 kg/$m^2$ (about 1600 to 1800 pounds per 1,000 square feet of material, or lb/MSF). ("MSF" is a standard abbreviation in the art for a thousand square feet; it is an area measurement for boxes, corrugated media and wallboard.)

TABLE 2

| Lab test result | Control Board | Formulation A Board | Formulation B Board |
|---|---|---|---|
| Board weight in kg/$m^2$ (lb/MSF) | 7,7 (1587) | 5,2 (1066) | 5,1 (1042) |
| Nail pull resistance in kg (lb) | 37 (81.7) | 22,8 (50.2) | 33 (72.8) |
| Core hardness in kg (lb) | 7,4 (16.3) | 2,4 (5.2) | 5,3 (11.6) |
| Humidified bond load in kg (lb) | 7,8 (17.3) | 9,2 (20.3) | 6,8 (15.1) |
| Humidified bond failure (%) | 0.6 | 5 | 11.1 |
| Flexural strength, face-up (MD) in kg (lb) | 21,3 (47) | 21,4 (47.2) | 23,9 (52.6) |
| Flexural strength, face-down (MD) in kg (lb) | 23,4 (51.5) | 30,3 (66.7) | 35,7 (78.8) |
| Flexural strength, face-up (XMD) in kg (lb) | 68 (150) | 61,5 (135.9) | 78,5 (173.1) |
| Flexural strength, face-down (XMD) in kg (lb) | 65,3 (144.4) | 56,9 (125.5) | 75 (165.4) |

MD: machine direction
XMD: across machine direction

As illustrated in Table 2, gypsum panels prepared using the Formulation A and B slurries have significant reductions in weight compared to the control board. With reference again to Table 1, the comparisons of the Formulation

A board to the Formulation B board are most striking. The water/stucco (w/s) ratios are similar in Formulation A and Formulation B. A significantly higher level of naphthalenesulfonate dispersant is also used in Formulation B. Also, in Formulation B substantially more pregelatinized starch was used, about 6% by weight, a greater than 100% increase over Formulation A accompanied by marked strength increases. Even so, the water demand to produce the required flowability remained low in the Formulation B slurry, the difference being about 10% in comparison to Formulation A. The low water demand in both Formulations is attributed to the synergistic effect of the combination of naphthalenesulfonate dispersant and sodium trimetaphosphate in the gypsum slurry, which increases the fluidity of the gypsum slurry, even in the presence of a substantially higher level of pregelatinized starch.

As illustrated in Table 2, the gypsum panels prepared using the Formulation B slurry has substantially increased strength compared with the panels prepared using the Formulation A slurry. By incorporating increased amounts of pregelatinized starch in combination with increased amounts of naphthalenesulfonate dispersant and sodium trimetaphosphate, nail pull resistance in the Formulation B board improved by 45% over the Formulation A board. Substantial increases in flexural strength were also observed in the Formulation B board as compared to the Formulation A board.

**Example 3**

1,27 cm (1/2 Inch) Gypsum Panel Weight Reduction Trials.

Further gypsum panel examples (Boards C, D and E), including slurry formulations and test results are shown in Table 3 below. The slurry formulations of Table 3 include the major components of the slurries. Values in parentheses are expressed as weight percent based on the weight of dry stucco.

TABLE 3

| **Trial formulation component/ parameter** | **Control Board** | **Formulation C Board** | **Formulation D Board** | **Formulation E Board** |
|---|---|---|---|---|
| Dry stucco in kg/m$^2$ (lb/MSF) | 6,3 (1300) | 6,2 (1281) | 5,9 (1196) | 5,2(1070) |
| Accelerator in g/m$^2$ (lb/MSF) | 44,9 (9.2) | 44,9 (9.2) | 44,9 (9.2) | 44,9 (9.2) |
| DILOFLO [1] in g/m$^2$ (lb/MSF) | 20 (4.1) (0.32%) | 39,6 (8.1) (0.63%) | 39,6 (8.1) (0.68%) | 39,6 (8.1) (0.76%) |
| Regular starch in g/m$^2$ (lb/MSF) | 23,7 (5.6) (0.43%) | 0 | 0 | 0 |
| Pregelatinized corn starch in g/m$^2$ (lb/MSF) | 0 | 48,8 (10) (0.78%) | 48,8 (10) (0.84%) | 48,8 (10) (0.93%) |
| Sodium trimetaphosphate in g/m$^2$ (lb/MSF) | 3,4 (0.7) (0.05%) | 7,8 (1.6) (0.12%) | 7,8 (1.6) (0.13%) | 7,8 (1.6) (0.15%) |
| Total water / stucco ratio (w/s) | 0.82 | 0.82 | 0.82 | 0.84 |
| **Trial formulation test results** | | | | |
| Dry board weight in kg/m$^2$ (lb/MSF) | 7,9 (1611) | 7,7 (1570) | 7,1 (1451) | 6,4 (1320) |
| Nail pull resistance in kg (lb) | 35 (77.3)† | 38,8 (85.5) | 35 (77.2) | 29,6 (65.2) |

† ASTM standard: 77 lb
[1] DILOFLO is a 45% Naphthalenesulfonate solution in water

As illustrated in Table 3, Boards C, D, and E were made from a slurry having substantially increased amounts of starch, DILOFLO dispersant, and sodium trimetaphosphate in comparison with the control panels (about a two-fold increase on a percentage basis for the starch and dispersant, and a two- to three-fold increase for the trimetaphosphate), while maintaining the w/s ratio constant. Nevertheless, strength as measured by nail pull resistance was not dramatically affected and panel weight was significantly reduced. Therefore, in this example of an embodiment of the invention, the

new formulation (such as, for example, Board D) can provide increased starch formulated in a usable, flowable slurry, while maintaining adequate strength.

**Example 4**

Wet Gypsum Cube Strength Test.

The wet cube strength tests were carried out by using Southard CKS board stucco, available from United States Gypsum Corp., Chicago, Illinois and tap water in the laboratory to determine their wet compressive strength. The following lab test procedure was used.

Stucco (1000 g), CSA (2 g), and tap water (1200 cc) at 21°C (about 70°F) were used for each wet gypsum cube cast. Pregelatinized corn starch (20 g, 2.0% based on stucco wt.) and CSA (2 g, 0.2% based on stucco wt.) were thoroughly dry mixed first in a plastic bag with the stucco prior to mixing with a tap water solution containing both naphthalenesulfonate dispersant and sodium trimetaphosphate. The dispersant used was DILOFLO dispersant (1.0 - 2.0%, as indicated in Table 4). Varying amounts of sodium trimetaphosphate were used also as indicated in Table 4.

The dry ingredients and aqueous solution were initially combined in a laboratory Warning blender, the mixture produced allowed to soak for 10 sec, and then the mixture was mixed at low speed for 10 sec in order to make the slurry. The slurries thus formed were cast into three 2"X2"X2" cube molds. The cast cubes were then removed from the molds, weighed, and sealed inside plastic bags to prevent moisture loss before the compressive strength test was performed. The compressive strength of the wet cubes was measured using an ATS machine and recorded as an average in bar (pounds per square inch (psi)). The results obtained were as follows:

TABLE 4

| Test Sample No. | Sodium trimetaphosphate, grams (wt% based on dry stucco) | DILOFLO 1 (wt% based on dry stucco) | Wet cube weight (2"X2"X2"), g | Wet cube compressive strength, bar (psi) |
|---|---|---|---|---|
| 1 | 0 | 1.5 | 183.57 | 22,1 (321) |
| 2 | 0.5 (0.05) | 1.5 | 183.11 | 24,6 (357) |
| 3 | 1 (0.1) | 1.5 | 183.19 | 24,8 (360) |
| 4 | 2 (0.2) | 1.5 | 183.51 | 24,9 (361) |
| 5 | 4 (0.4) | 1.5 | 183.65 | 26,3 (381) |
| 6 | 10 (1.0) | 1.5 | 183.47 | 25,4 (369) |
| 7 | 0 | 1.0 | 184.02 | 23,8 (345) |
| 8 | 0.5 (0.05) | 1.0 | 183.66 | 24,1 (349) |
| 9 | 1 (0.1) | 1.0 | 183.93 | 24,5 (356) |
| 10 | 2 (0.2) | 1.0 | 182.67 | 25,2 (366) |
| 11 | 4 (0.4) | 1.0 | 183.53 | 25,1 (365) |
| 12 | 10 (1.0) | 1.0 | 183.48 | 23,5 (341) |
| 13 | 0 | 2.0 | 183.33 | 23,8 (345) |
| 14 | 0.5 (0.05) | 2.0 | 184.06 | 24,5 (356) |
| 15 | 1 (0.1) | 2.0 | 184.3 | 25,0 (363) |
| 16 | 2 (0.2) | 2.0 | 184.02 | 25,0 (363) |
| 17 | 4 (0.4) | 2.0 | 183.5 | 25,3 (368) |
| 18 | 10 (1.0) | 2.0 | 182.68 | 23,3 (339) |
| [1] DILOFLO is a 45% Naphthalensulfonate solution in water | | | | |

As illustrated in Table 4, Samples 4-5, 10-11, and 17, having levels of sodium trimetaphosphate in the about 0.12 - 0.4 % range of the present invention generally provided superior wet cube compressive strength as compared to

samples with sodium trimetaphosphate outside this range.

**Example 5**

1,27 cm (1/2 Inch) Light Weight Gypsum Panel Plant Production Trials.

Further trials were performed (Trial Boards 1 and 2), including slurry formulations and test results are shown in Table 5 below. The slurry formulations of Table 5 include the major components of the slurries. Values in parentheses are expressed as weight percent based on the weight of dry stucco.

TABLE 5

| Trial formulation component/ parameter | Control Board 1 | Plant Formulation Trial Board 1 | Control Board 2 | Plant Formulation Trial Board 2 |
|---|---|---|---|---|
| Dry stucco in kg/m$^2$ (lb/MSF) | 6,4 (1308) | 5,7 (1160) | 5,9 (1212) | 5,5 (1120) |
| DILOFLO [1] in g/m$^2$ (lb/MSF) | 29 (5.98) (0.457%) | 39 (7.98) (0.688%) | 35 (7.18) (0.592%) | 43,9 (8.99) (0.803%) |
| Regular starch in g/m$^2$ (lb/MSF) | (5.0) (0.38%) | 0 | (4.6) (0.38%) | 0 |
| Pregelatinized corn starch in g/m$^2$ (lb/MSF) | 24,4 (2.0) (0.15%) | 48,8 (10) (0.86%) | 12,2 (2.5) (0.21%) | 43,9 (9.0) (0.80%) |
| Sodium trimetaphosphate in g/m$^2$ (lb/MSF) | 3,4 (0.7) (0.05%) | 9,8 (2.0) (0.17%) | 2,9 (0.6) (0.05%) | 7,8 (1.6) (0.14%) |
| Total water / stucco ratio (w/s) | 0.79 | 0.77 | 0.86 | 0.84 |
| **Trial formulation test results** | | | | |
| Dry board weight in kg/m$^2$ (lb/MSF) | 7,9 (1619) | 7,1 (1456) | 7,6 (1553) | 7 (1443) |
| Nail pull resistance in kg (lb) | 37 (81.5)† | 37,4 (82.4) | 36,6 (80.7) | 36,5 (80.4) |
| Flexural strength, average (MD) in kg (lb) | 18,9 (41.7) | (43.7) | 20 ,3(44.8) | 21,3 (46.9) |
| Flexural strength, average (XMD) in kg (lb) | 60,8 (134.1) | 61,5 (135.5) | 66,2 (146) | 62,2 (137.2) |
| Humidified bond[2] load, average in kg (lb) | 8,7 (19.2) | 8 (17.7) | 9,5 (20.9) | 8,7 (19.1) |
| Humidified bond[2,3] failure (%) | 1.6 | 0.1 | 0.5 | 0 |

† ASTM standard: 35 kg (77 lb)
MD: machine direction
XMD: across machine direction
[1] DILOFLO is a 45% Naphthalensulfonate solution in water
[2] 90°F/ 90% Relative Humidity
[3] It is well understood that under these test conditions, percentage failure rates < 50% are acceptable.

As illustrated in Table 5, Trial Boards 1 and 2 were made from a slurry having substantially increased amounts of starch, DILOFLO dispersant, and sodium trimetaphosphate, while slightly decreasing the w/s ratio, in comparison with the control panels. Nevertheless, strength as measured by nail pull resistance and flexural testing was maintained or improved, and board weight was significantly reduced. Therefore, in this example of an embodiment of the invention, the new formulation (such as, for example, Trial Boards 1 and 2) can provide increased trimetaphosphate and starch formulated in a usable, flowable slurry, while maintaining adequate strength.

**Example 6**

1,27 cm (1/2 Inch) Ultra-Light Weight Gypsum Panel Plant Production Trials.

Further trials were performed (Trial Boards 3 and 4) using Formulation B (Example 1) as in Example 2, except that the pregelatinized corn starch was prepared with water at 10% concentration (wet starch preparation) and a blend of HYONIC PFM soaps (available from GEO Specialty Chemicals, Lafayette, Indiana) was used. For example, Trial Board 3 was prepared with a blend of HYONIC PFM 10/HYONIC PFM 33 ranging from 65-70% by weight/35-30% by weight. For example, Trial Board 4 was prepared with a 70/30 wt./wt. blend of HYONIC PFM 10/HYONIC PFM 33. The trial results are shown in Table 6 below.

TABLE 6

| **Lab test result** | **Trial Board 3 (Formulation B plus HYONIC soap blend 65/35) (n = 12)** | **Trial Board** 4 **(Formulation B plus HYONIC soap blend 70/30) (n = 34)*** |
|---|---|---|
| Board weight in kg/m$^2$ (lb/MSF) | 5,4 (1106) | 4,9 (1013) |
| Nail pull resistance[a] (lb) | 38,8 (85.5) | 36,4 (80.3) |
| Core hardness[b] (lb) | >6,8 (>15) | (12.4) |
| Flexural strength, average[c] (MD) (lb) | 25,2 (55.6) | 5,6 (60.3) [1] |
| Flexural strength, averaged (XMD) (lb) | 63,5 (140.1) | 64,5 (142.3) [1] |

* Except as marked.
[1] n = 4
MD: machine direction
XMD: across machine direction
[a] ASTM standard: 35 kg (77 lb)
[b] ASTM standard: 5 kg (11 lb)
[c] ASTM standard: 16 kg (36 lb)
[d] ASTM standard: 49 kg (107 lb)

As illustrated in Table 6, strength characteristics as measured by nail pull and core hardness were above the ASTM standard. Flexural strength was also measured to be above the ASTM standard. Again, in this example of an embodiment of the invention, the new formulation (such as, for example, Trial Boards 3 and 4) can provide increased trimetaphosphate and starch formulated in a usable, flowable slurry, while maintaining adequate strength.

**Example 7**

High temperature thermal insulation testing pursuant to the procedures discussed in ASTM Pub. WK25392 was conducted to examine the high temperature thermal insulating characteristics of the 1,6 cm (5/8 inch) thick gypsum panels made in accordance with the invention.

The heat transfer conditions reflected in this test can be described by the energy equation for one dimensional unsteady heat conduction through the panel thickness:

$$\Delta/\Delta x\ (k\ (\Delta T/\Delta x)) + q = \rho c_p\ (\Delta T/\Delta t) \qquad (1)$$

Where *T* is the temperature at a given time *t* and depth x in the panel. The thermal conductivity (*k*), density (*ρ*), and specific heat ($c_p$) are nonlinear temperature dependent functions at elevated temperatures. The heat generation rate *q* represents a variety of endothermic and exothermic reactions, *e.g.,* gypsum phase changes and face paper combustion, which occur at different temperatures and, correspondingly, at different times.

For the purpose of evaluating the total heat conduction through the gypsum panel and hence its thermal insulating performance, it typically is not necessary to measure and describe each variable separately. It is sufficient to evaluate their net cumulative effect on heat transfer.

For this purpose, a high temperature thermal insulation test was developed in which test specimens consisting of two 4 inch (100 mm) diameter disks are clamped together by type G bugle head screws.

Test specimens were prepared from a gypsum panel made using a core containing:

| | |
|---|---|
| Stucco | 5,7 kg/m$^2$ (1170 lb/msf) |
| Pregelatinized corn starch | 136 g/m$^2$ (28 lb/msf) (2.3% by weight of stucco) |
| Sodium trimetaphosphate (10% aqueous solution) | 142 g/m$^2$ (29 lb/msf) (2.5% by weight of stucco) |
| Naphthalene sulfonate dispersant (45% solids) | 24 g/m$^2$ (5 lb/msf) (0.4% by weight of stucco) |
| Glass fiber | 10 g/m$^2$ (2 lb/msf) (0.2% by weight of stucco) |
| Cover paper | front 249 g/m$^2$ (51 lb/msf) (heavy manila); back 190 g/m$^2$ (39 lb/msf) (newsprint) |

A thermocouple is placed at the center of the specimen between the disks. The specimen then is mounted on edge in a rack designed to insure uniform heating over its surface and placed in a furnace pre-heated to 930°F (500°C).

The temperature rise at the center of the test specimen is recorded and a thermal insulation index, *TI*, computed as the time, in minutes, required for the test specimen to heat from about 105°F (40°C) to about 390°F (200°C) is measured. The thermal insulation index of the test specimen is calculated as:

$$TI = t200°C - t40°C \qquad (2)$$

A temperature profile developed from data collected by this procedure often shows the transition from gypsum to hemihydrate at about 212°F (100°C) and the conversion of hemihydrate to the first anhydrite phase near about 285°F (140°C). Such data also often shows that once these phase transitions are completed, the temperature rises rapidly in a linear fashion as no further chemical or phase change reactions of significance typically occur below the oven temperature of about 930°F (500°C). By waiting until the specimen's core temperature has reached about 105°F (40°C) to begin timing, acceptable repeatability and reproducibility were achieved.

The above thermal insulation test was performed on disks cut from the 1,6 cm (5/8 inch) thick gypsum panel prepared in accordance with the invention having a panel weight of 7,5 kg/m$^2$ (1545 lb/msf). These samples had an average Thermal Insulation Index of 18.6 minutes. In comparison, the average Thermal Insulation Index value for a commercially available 7,3 kg/m$^2$ (approximately 1500 lb/msf) nominal 1,27 cm (1/2 inch) thick commercial interior ceiling panel was 17.0 minutes. It was unexpected that the panel of the invention (with a core density of 480 kg/m$^3$ (about 30 pcf)) would have a greater Thermal Insulation Index relative to a panel of approximately the same weight but a greater core density (561 kg/m$^3$ (about 35 pcf)).

**Example 8**

Samples of panels of the invention were subject to fire testing pursuant to the procedures of UL U419 using nominal 1,6 cm (5/8 inch) thick gypsum panels in accordance with the invention having a panel weight of 7,5 kg/m$^2$ (about 1546 lb/msf) comprising:

| | |
|---|---|
| Stucco | 5,7 kg/m$^2$ (1170 lb/msf) |
| Pregelatinized starch | 136 g/m$^2$ (28 lb/msf) (2.3% by weight based on stucco) |
| Sodium trimetaphosphate (dry basis) | 0.12% by weight based on stucco |
| Naphthalene sulfonate dispersant (dry basis) | 0.14% by weight based on stucco |
| 1,27 cm (1/2 inch) chopped e-glass fiber | 0.17% by weight based on stucco |
| Paper | front 246 g/m$^2$ (51 lb/msf) (heavy manila); back 190 g/m$^2$ (39 lb/msf) (newsprint) |

The physical parameters of the 4'x10' gypsum panels were as follows:

| | |
|---|---|
| Average panel thickness | 1,5 cm (0.606 in.) (nominally 1,6 cm (5/8 in.)) |
| Average panel weight (4'x10') | 28 kg/7,5 kg/$m^2$ (61.62 lb/1545 lb/msf) |
| Average board density | 491 kg/$m^3$ (30.64 pcf) |

In the U419 test, wall assemblies in a 305 cm by 305 cm (10 foot by 10 foot) wall were constructed. The studs used were commercially available light gauge steel studs formed from steel having a thickness from 0,04 to 0,08 cm (about 0.015 inches to about 0.032 inches), and having the dimensions of 9,2 to 8,9 cm (about 3 5/8" or 3 1/2" inches) wide by 3,175 (about 1 ¼" inches) thick. The light gauge steel studs were spaced 61 cm (about 24 inches) apart in the assembly per U419 specification.

The U419 test procedures are considered among the most rigorous of the types of UL tests as the light gauge steel studs often experience heat deformation (typically urging the exposed panels towards the gas jet flames) due to heat transfer through the panels and into the assembly cavity between the exposed and unexposed panels. This deformation often causes separation of the panel joints, or other failures, on the heated, exposed side of the assembly allowing penetration of the gas jet flame and/or high heat quickly into the assembly cavity and into the unexposed, unheated side of the assembly. It is expected that the lighter the gauge of the steel studs, the greater the likelihood of heat deformation of the studs and assembly.

The gypsum panels were attached horizontally, *i.e.* perpendicular to the vertical studs, on each side of the assembly. Typically, two 305 cm by 122 cm (10 foot by 4 foot) panels, and one 305 cm by 61 cm (10 foot by 2 foot) panel were used on each side of the frame. The panels were attached to the frame with one inch type-S hi/low screws on each side of the assembly, eight inches off center. The panels were positioned so that the seams between the panels on each side of the frame were aligned with each other. Then, the seams were sealed with paper joint tape and joint compound. In the tests following the procedures of U419, the steel used to form the light gauge studs was either 0,04 to 0,045 cm (0.015 inches or 0.018 inches) thick and the assembly is not subject to external loading.

In each of the tests, the completed panel and frame assembly was positioned so that one side of the assembly, the exposed side, was subjected to an array of gas jet furnace flames that heated the exposed side of the assembly to temperatures and at a rate specified by the ASTM standard ASTM 119. Pursuant to the U419 procedures, a set of about 14 sensors were arrayed in spaced relation between the heated exposed side of the assembly and each of the gas jets to monitor the temperatures used to heated the exposed side of the assembly. Also pursuant to those procedures, a set of sensors were arrayed in spaced relation on the opposite, unheated, unexposed side of the assembly. Typically, 12 sensors were applied to the, unexposed surface of the assembly in a pattern in accordance with the UL procedures. Pursuant to those procedures, each sensor also was covered by an insulating pad.

During the fire test procedures, the furnace temperatures used followed the ASTM-119 heating curve starting at ambient temperatures and increasing on the exposed side of the assembly to over 871°C (1600° F) in approximately one hour, with the most rapid change in temperature occurring early in the test and near the test's conclusion. The test was terminated when either there was a catastrophic load failure on the exposed side of the assembly, the average of the temperatures from the sensors on the unexposed side of the assembly exceeded a preselected temperature (121°C (250° F) above ambient), or when a single sensor on the unexposed side of the assembly exceeded a second preselected temperature (163°C (325° F) above ambient).

The data generated during the U419 test is plotted in Figures 1 and 2. Figure 1 is a plot of the temperatures reported by the single sensor that reached the maximum temperature at the test termination and a plot of the average of the sensor temperatures from the start of the test to the test termination. Figure 1 also shows a plot of the ASTM 119 temperature curve used for the furnace temperatures on the exposed, heated side of the assembly. Figure 2 is an expanded plot of the data for that maximum single sensor and average sensor temperatures shown in Figure 1.

As indicated Figures 1 and 2, both maximum single sensor and average sensor temperatures on the unexposed surface of the assembly gradually increased during the testing relative to the furnace temperatures, with a more rapid increase in the single sensor temperature near the test termination. For example, at about 20 minutes elapsed time, the maximum sensor and average sensor temperatures on the unexposed surface of the assembly were less than 82°C (about 180° F) and 79°C (about 175°F), respectively. At about 25 minutes, the maximum sensor and average sensor temperatures were less than 90°C (about 195°F) and 88°C (about 190° F), respectively. At about 30 minutes, the maximum sensor and average sensor temperatures were less than 110 °C (about 230°F) and 99°C (about 210° F), respectively. The maximum single sensor temperature did not exceed 149°C (300° F), until well after about 30 minutes elapsed time, with a temperature of less than 210°C (about 410° F) at about 35 minutes. The average sensor did not exceed 99°C (300° F) until the termination of the test at over 35 minutes, with a with a temperature of less than 143°C (about 290° F) at about 35 minutes.

The panels of the invention also satisfied criteria such as that used to establish UL fire ratings, which is confirmed

by the data shown in Figures 1 and 2. The panels of the invention satisfied criteria that would qualify for a "30 minute" fire rating. Among other requirements, such criteria would require an average sensor temperature on the unexposed surface of the assembly of no more than the ambient temperature at the start of the test plus 121°C (250° F) and a maximum individual sensor temperature of no more than the ambient temperature at the start of the test plus 163°C (325° F) (typically ambient temperatures are 32°C (about 90° F) or less for such testing). The temperatures from the U419 test under these criteria are indicated below.

| | Average | Individual |
|---|---|---|
| Unexposed Surface Limiting Temperature Criteria Ambient Temperature 22,5°C (69°F) | 159°C (319°F) | 201°C (394°F) |
| Unexposed Surface Temperature Limits Reached | Not Exceeded @ 151°C (304°F) | T/C # 1 @ 34 Min. 30 Sec. |

Therefore, this test demonstrates that the panels of the present invention have the ability to substantially delay the passage of heat through wall or ceiling structures for over 30 minutes under the very difficult U419 protocols. Thus, notwithstanding the panels' low core density and low panel weight relative to the panel thickness, the panels of the invention can play an important role in controlling the spread of fire within buildings.

**Example 9**

Panels of the invention also were subjected to fire testing following the procedures of the UL protocol U305 using the nominal 1,6 cm (5/8 inch) thick gypsum panels made in accordance with the core formulation and paper cover sheets described in Example 8 above, and having a panel weight of about 7,7 kg/m$^2$ (1580 lb/msf).

The physical parameters of the gypsum panels of the invention used in this testing were as follows:

| | |
|---|---|
| Average Panel Thickness | 1,57 cm (0.620 in.) (nominally 1,6 cm (5/8 in.)) |
| Average Panel Weight | 28,6 kg/7,7 kg/m$^2$ (63.10 lb/1580 lb/msf) |
| Average Density | 490 kg/m$^3$ (30.57 pcf) |

In this example, the testing procedure of the U305 protocol requires load bearing assemblies made from nominal 1,6 cm (5/8 inch) thick gypsum panels and wood stud framing. Pursuant to the U305 test procedures, the panels of the invention were applied to a framing such as that discussed above in Example 8 made using #2 Douglas fir 2 x 4 studs (8,9 cm wide by 3,8 cm thick (approximately 3.5 inches wide by 1.5 inches thick)), spaced 40 cm (about 16 inches) apart, and mounted between Douglass fir 2 x 4 base and top plates. The panels were applied horizontally with joints aligned on opposite sides of the system with 6d nails, and the joints were taped and sealed with joint compound. A total load of 8073 kg (about 17,800 pounds) was applied to top of the assembly.

The data generated during the U305 test is plotted in Figures 3 and 4. Figure 3 plot of the temperatures reported by the single sensor that reached the maximum temperature at the test termination and a plot of the average of the sensor temperatures from the start of the test to the test termination. Figure 3 also shows a plot of the ASTM 119 temperature curve used for the furnace temperatures on the heated, exposed side of the assembly. Figure 4 is an expanded plot of the data for that maximum single sensor and average sensor temperatures shown in Figure 4. The test was terminated due to load failure of the assembly at about 46 minutes.

As indicated Figures 3 and 4, both maximum single sensor and average sensor temperatures on the unexposed surface of the assembly gradually increased during the testing relative to the furnace temperatures on the heated side of the assembly. For example, at about 20 minutes elapsed time, the maximum sensor and average sensor temperatures were less than 79°C and 74°C (about 175°F and about 165°F), respectively. At about 25 minutes, the maximum sensor and average sensor temperatures were less than 88°C and 82°C (about 190°F and about 180°F), respective. At about 30 minutes, the maximum sensor and average sensor temperatures were less than 96°C and 88°C (about 205° F and about 190° F), respective. The maximum single sensor temperature did not exceed 149°C (300° F), until well after about 45 minutes elapsed time, with a temperature of less than 107°C (225° F) at about 35 minutes; less than 118°C (about 245° F) at about 40 minutes; and less than 135°C (about 275° F) at about 45 minutes. The average sensor temperature did not exceed 149°C (300° F) by the termination of the test, with a temperature of less than 96°C (205° F) at about 35 minutes; less than 110°C (about 230° F) at about 40 minutes; and less than 121°C (about 250° F) at about 45 minutes.

The panels of the invention also satisfied criteria such as that which would establish a "30 minute" fire rating,

which is confirmed by the data shown in Figures 3 and 4. As discussed in Example 8, such criteria would require an average sensor temperature on the unexposed surface of the assembly of no more than the ambient temperature at the start of the test plus 121°C (250° F) and a maximum individual sensor temperature at the start of the test of no more than the ambient temperature plus 163°C (325° F) (typically ambient temperatures are 32°C (about 90 °F) or less for such testing). The temperatures from the U305 test under these criteria are indicated below, with the "not exceeded" result indicating that the maximum temperature limits on the unexposed side of the assembly were not reached before the test was terminated due to load failure.

| | **Average** | **Individual** |
|---|---|---|
| Unexposed Surface Limiting Temperature Criteria Ambient Temperature 16°C (61°F) | 155°C (311°F) | 197°C (386°F) |
| Unexposed Surface Temperature Limits Reached | Not Exceeded @ 126°C (259°F) | Not Exceeded @ 150°C (303°F) |

This test further demonstrates that the panels of the present invention have the ability to provide substantial fire resistance and protection notwithstanding the panels' low core density and low panel weight relative to the panel thickness, As indicated in the above U305 tests, even while under substantial loading, assemblies made using the panels of the invention substantially delay the passage of heat through wall or ceiling structures for over 30 and at least up to 45 minutes under the U305 conditions.

**Example 10**

In this Example, the panel of Example 8 was subjected to a nail pull resistance testing to determine the panels' strength properties under this commonly used criterion. The nail pull resistance test is a measure of a combination of the strengths of a gypsum panel's core, its cover sheets, and the bond between the cover sheets and the gypsum. The test measures the maximum force required to pull a nail with a head through the panel until major cracking of the board occurs. In the tests of this Example, the nail pull resistance tests were carried out in accordance with ASTM C 473-09.

In brief summary, the tested specimen was conditioned at 21°C (about 70°F) and about 50% relative humidity for 24 hours prior to testing. A 0,Nm28cm (7/64th inch) drill bit was used to drill pilot holes through the thickness of the specimens. The specimen then was placed on a specimen-support plate with a three inch diameter hole in the center, which was perpendicular to the travel of the test nail. The pilot hole was aligned with the nail shank tip. Load was applied at the strain-rate of one inch per minute until maximum load was achieved. At 90% of the peak load after passing the peak load, the testing was stopped and the peak load is recorded as nail pull resistance.

The nail pull resistance results are summarized in Table 7 below.

TABLE 7

| **Nail Pull Strength** | | | |
|---|---|---|---|
| Sample | Average Peak Load in Nm (lb-f) | Calculated Panel Weights in $kg/m^2$ (lb/msf) | Board Density in $kg/m^3$ ($lb/ft^3$) |
| 1 | 119,6 (88.2) | 7,8 (1602) | 493 (30.8) |
| 2 | 116,1 (85.6) | 7,7 (1586) | 486 (30.5) |
| 3 | 122,7 (90.5) | 7,8 (1597) | 492 (30.7) |
| 4 | 121,3 (89.5) | 7,9 (1608) | 495 (30.9) |
| 5 | 116,2 (85.7) | 7,7 (1592) | 490 (30.6) |
| 6 | 118,2 (87.1) | 7,7 (1591) | 490 (30.6) |
| Avg. | 118,5 (87.4) | 7,8 (1596) | 492 (30.7) |

The average nail pull resistance values for these examples of the low weight, low density panel of the invention averaged 118,5 Nm (87.4 lb-f). This indicates that, notwithstanding the low density of the panels of the invention, the panels of the invention can achieve nail pull resistance values comparable to much heavier and denser fire rated gypsum panels.

### Example 11

Laboratory samples were made to evaluate the effect of adding siloxane, and siloxane together with pregelatinized starch in a gypsum slurry formulation and panels of the invention made with such a slurry. The formulations used in this testing are set out in Table 8 below.

TABLE 8

Test Results for Formulations of the Invention with Siloxane and Siloxane Together with Pre-Gelled Starch (10#/msf)

| Stucco | HRA | Water | Pregelatinized Corn Starch | Siloxane | STMP | Dispersant | Soap | W/S Ratio | Board Drying | | Siloxane | MgO | Flyash | Board Weight | Cube Density | Water Adsorption | Cube Strength | Hi-Temp Shrinkage | Thermal Insulation Index |
|---|---|---|---|---|---|---|---|---|---|---|---|---|---|---|---|---|---|---|---|
| (g) | (g) | (cc) | (g) | (% of stucco) | (g) | (wet, g) | (drops) | | 177°C (350 °F) | 47°C (116 °F) | (g) | (g) | (g) | kg/m² (lb/msf) | kg/m³ (lb/cf) | (%) | bar (psi) | diameter (%) | min. (ave.) |
| | | | | | | | | | (Min) | (hr) | | | | | | | | | |
| 1000 | 15 | 1600 | 0 | 0 | 1.5 | 4 | 5 | 1.6 | 30 | 48 | 0 | 0 | 0 | 7,4 (1525) | n/a | n/a | n/a | 5.62 | 21.8 |
| 1000 | 15 | 1600 | 0 | 1.0 | 1.5 | 4 | 5 | 1.6 | 30 | 48 | 10 | 4 | 10 | 7,5 (1526) | 462 (28.87) | 22 | 26 (378) | 3.02 | 21.0 |
| 1000 | 15 | 1600 | 20 | 0.0 | 1.5 | 4 | 5 | 1.6 | 30 | 48 | 0 | 0 | 0 | 9,4 (1921) | n/a | n/a | n/a | 7.29 | 21.6 |
| 1000 | 15 | 1600 | 20 | 1.0 | 1.5 | 4 | 5 | 1.6 | 30 | 48 | 10 | 4 | 10 | 8,3 (1700) | 511 (31.87) | 3.4 | 32 (459) | 3.13 | 21.9 |
| 1000 | 15 | 1600 | 40 | 0.0 | 1.5 | 4 | 5 | 1.6 | 30 | 48 | 0 | 0 | 0 | 9,8 (2014) | n/a | n/a | n/a | 8.11 | 25.3 |
| 1000 | 15 | 1600 | 40 | 1.0 | 1.5 | 4 | 5 | 1.6 | 30 | 48 | 10 | 4 | 10 | 8,8 (1799) | 543 (33.91) | 2.1 | 37 (540) | 3.16 | 23.1 |

A high sheer mixer running at about 7500 RPM for 2.5 minutes was used to make the siloxane emulsion. The siloxane emulsion was mixed with stucco and additives to make a slurry with 10 seconds soaking plus 10 seconds mixing

at high speed of a Waring blender. To evaluate the water resistance of provided by the core slurry formulations above, 2"x2"x2" cubes were cast with the slurry and dried at about 116°F overnight for a water absorption test. The core slurry formulations also were used to form approximately one foot by one foot panels, with a nominal 1,6cm (5/8 inch) thickness, by laboratory casting between paper cover sheets for high temperature shrinkage and thermal insulation tests discussed in this example..

Using the cast cubes, the water absorption test method ASTM C1396 was conducted by placing dry cubes in 21°C (70°F) water for 2 hours and determining the weight gain percentage. This test demonstrated water absorption levels of about 22% for the formulation with only added siloxane, and a significantly improved water absorption level about 3.4% and about 2.1% for the 1% siloxane/2% pregelatinized starch (20 grams) and 1% siloxane/4% pregelatinized starch (40 grams) respectively.

The high temperature shrinkage testing was carried out in accordance with the procedures developed and reported in ASTM Pub. WK25392 to provide a quantitative measure of the shrinkage characteristics of gypsum panels of the present invention under high temperature conditions. The thermal insulation testing was carried out using the procedures discussed above in Example 7. For the high temperature shrinkage testing and thermal insulation testing, ten 4 inch (100 mm) diameter disks were cut from two of the above mentioned gypsum board samples using a drill press with a hole saw blade. Six of the disks were used for the high temperature shrinkage testing and four were used for the thermal insulation testing.

The high temperature shrinkage test procedure reflects the fact that the high temperature shrinkage that gypsum panels may experience under fire condition is influenced by factors in addition to calcining reactions that may occur in the panel gypsum cores under high temperature conditions. The test protocol, accordingly, uses an unvented furnace so that there is no airflow from outside of the furnace that might cool the test specimens. The furnace temperature is about 1560° F (850° C) to account for the shrinkage that may occur in the anhydrite phases of the gypsum core structures, as well as calcining and other high temperature effects, when exposed to the high temperatures fire conditions.

In order to prevent thermal shock to the test specimens, which might produce invalid test results due to spalling and breakage, the test protocol was modified to place the test specimens in the furnace before it was heated to about 1560° F (850 °C). The specimens were held at that temperature for a minimum of about 20 minutes before the furnace was shut off. The furnace door remained closed while the furnace cooled. The specimens were not removed for measurement until after the temperature had dropped to near room temperature.

As gypsum board is anisotropic, the amount of shrinkage will vary slightly in the length and width directions. Therefore, two orthogonal measurements were taken and averaged to compute the mean diameter of the disk. In these tests, two measurements at 90 degrees to each other were taken as it has been found that this approach provides a consistent mean diameter measurement from specimen to specimen. Typically, if the two measurements for a disk differed by more than 0.01 inches (0.25 mm), then the disk was rejected and the measurements excluded from the reported results. Shrinkage was calculated as the percent change in mean diameter after heat exposure, and denoted "S," typically to the nearest 0.1% for the group of six test specimens.

As can be seen from Table 7, in addition to providing improved moisture resistance, the addition of siloxane without added pregelatinzed starch unexpectedly improved the shrinkage properties of the panel sample, reducing shrinkage from almost 6% to about 3%. The addition of pregelled starch increased the shrinkage of the samples relative to the samples without added pregelled starch and the samples with only added siloxane. That shrinkage increased with the increased amount of added pregelled starch. However, the combination of added siloxane and added pregelled starch unexpectedly, significantly improved the high temperature shrinkage of the test samples. For example, the addition of siloxane reduced the shrinkage of samples with 20 grams pregelled starch from over 7% to under 3.5%. Similarly, the addition of siloxane to the samples with 40 grams pregelled starch reduced high temperature shrinkage from over 8% to over 3%. Accordingly, the addition of siloxane to gypsum panels of the invention provides further resistance to high temperature shrinkage which should further, and unexpectedly improve the fire resistance properties of the panels of the invention.

The use of the terms "a" and "an" and "the" and similar referents in the context of describing the invention (especially in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred aspects and embodiments of this invention are described herein, including the best mode known to the inventors for carrying out the invention. It should be understood that the illustrated embodiments are exemplary only,

and should not be taken as limiting the scope of the invention.

## Claims

1. A gypsum panel comprising a set gypsum core disposed between two cover sheets, the panel having a density in the range from 430 to 592 kg/$m^3$ (27 to 37 pounds per cubic foot) and a Thermal insulation index greater than 17,0 minutes, the panel comprises:

   - 5,95 - 9,3 kg/$m^2$ (1220-1750 lb/msf) set gypsum
   - 0,3 - 4,0% by weight pregelatinized starch
   - 0,15 - 0,50% by weight of a phosphate-containing component
   - 0,3 - 1,5% by weight dispersant
   - 0,1- 0,3% by weight mineral, glass or carbon fiber
   - foam voids in an amount effective to provide the specific panel density
   - a thickness of 1,6 cm (0,625 inch).

## Patentansprüche

1. Gipsplatte, die einen abgebundenen Gipskern umfasst, der zwischen zwei Deckbögen angeordnet ist, wobei die Platte eine Dichte im Bereich von 430 bis 592 kg/$m^3$ (27 bis 37 Pfund pro Kubikfuß) und einen Wärmedämmungsindex von mehr als 17,0 Minuten aufweist, wobei die Platte Folgendes aufweist:

   - 5,95 - 9,3 kg/$m^2$ (1220-1750 Pfund/1000 Quadratfuß) abgebundenen Gipses,
   - 0,3 - 4,0 Gew.-% vorgelatinierter Stärke,
   - 0,15 - 0,50 Gew.-% einer phosphathaltigen Komponente,
   - 0,3 - 1,5 Gew.-% Dispergiermittel,
   - 0,1 - 0,3 Gew.-% Mineral-, Glas- oder Kohlenstofffaser,
   - Schaumhohlräume in einer Menge, die zur Bereitstellung der spezifischen Plattendichte wirksam ist,
   - eine Dicke von 1,6 cm (0,625 Zoll).

## Revendications

1. Panneau de gypse comprenant un noyau en gypse durci disposé entre deux couches de couverture, le panneau ayant une densité allant de 430 à 592 kg/$m^3$ (27 à 37 livres par pied cube) et un index d'isolation thermique supérieur à 17,0 minutes, le panneau comprenant :

   - 5,95 - 9,3 kg/$m^2$ (1220-1750 lb/msf) de gypse durci
   - 0,3 - 4,0% en poids d'amidon prégélatinisé
   - 0,15 - 0,50% en poids d'un composé contenant du phosphate
   - 0,3 - 1,5% en poids d'un dispersant
   - 0,1 - 0,3% en poids d'une fibre minérale, de verre ou de carbone
   - des vides de mousse en une quantité efficace pour fournir la densité de panneau spécifique
   - une épaisseur de 1,6 cm (0,625 pouce).

FIGURE 1

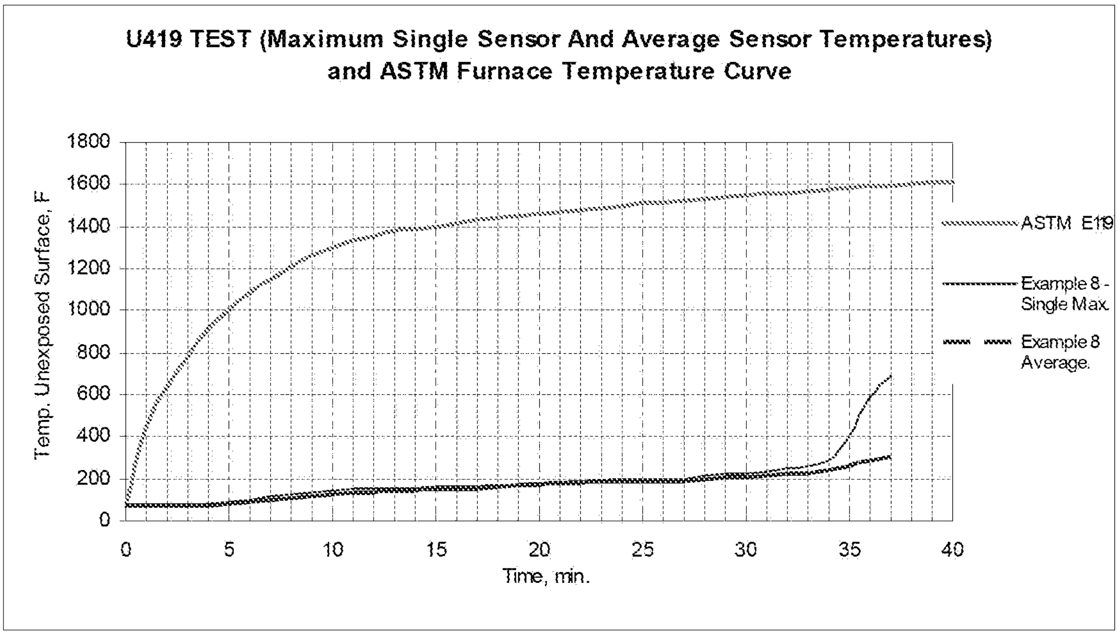
U419 TEST (Maximum Single Sensor And Average Sensor Temperatures)
and ASTM Furnace Temperature Curve
Temp. Unexposed Surface, F
1800
1600
1400
1200
1000
800
600
400
200
0
0
5
10
15
20
25
30
35
40
Time, min.
ASTM E119
Example 8 - Single Max.
Example 8 Average.

FIGURE 2

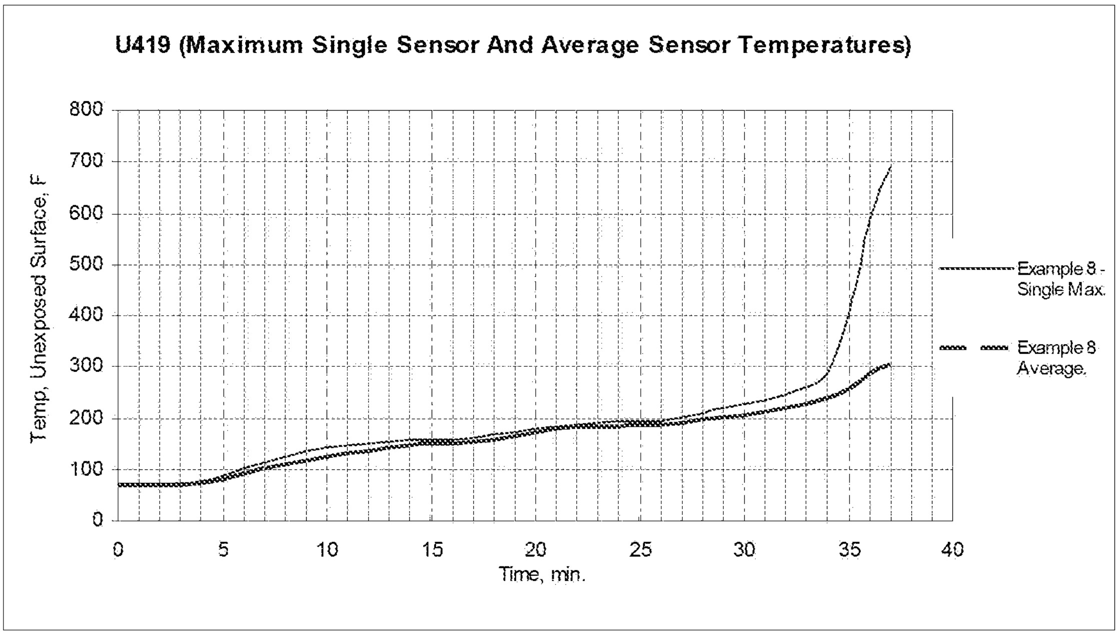
U419 (Maximum Single Sensor And Average Sensor Temperatures)
Temp, Unexposed Surface, F
800
700
600
500
400
300
200
100
0
0
5
10
15
20
25
30
35
40
Time, min.
Example 8 - Single Max.
Example 8 Average.

FIGURE 3

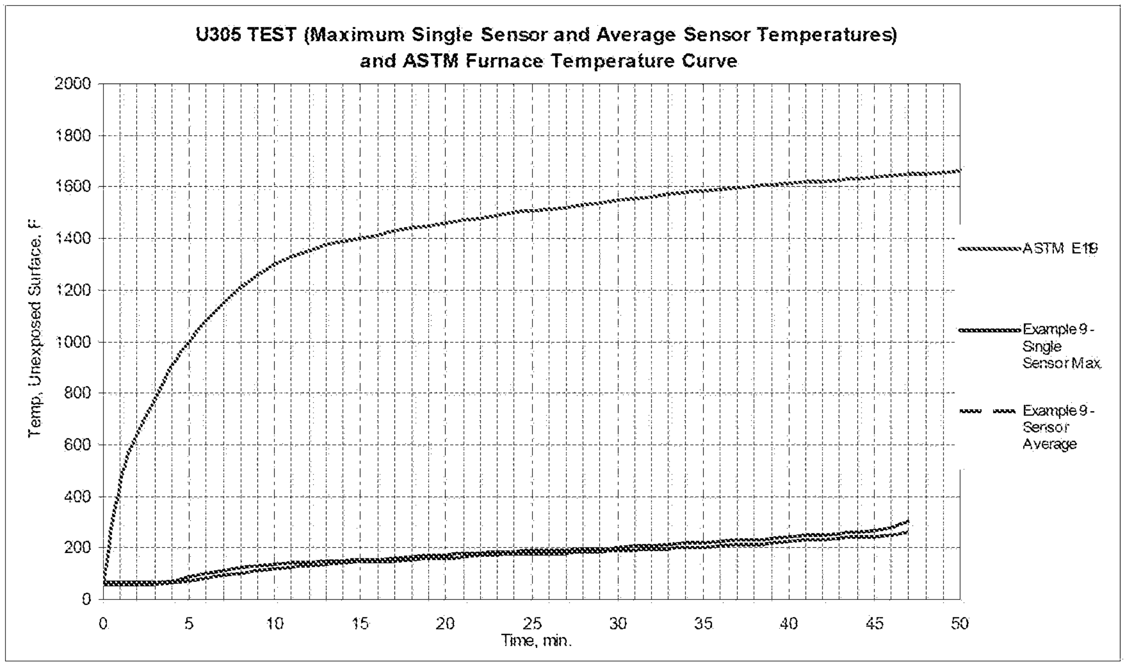
U305 TEST (Maximum Single Sensor and Average Sensor Temperatures) and ASTM Furnace Temperature Curve
Temp, Unexposed Surface, F
Time, min.
2000
1800
1600
1400
1200
1000
800
600
400
200
0
0
5
10
15
20
25
30
35
40
45
50
ASTM E119
Example 9 - Single Sensor Max.
Example 9 - Sensor Average

FIGURE 4

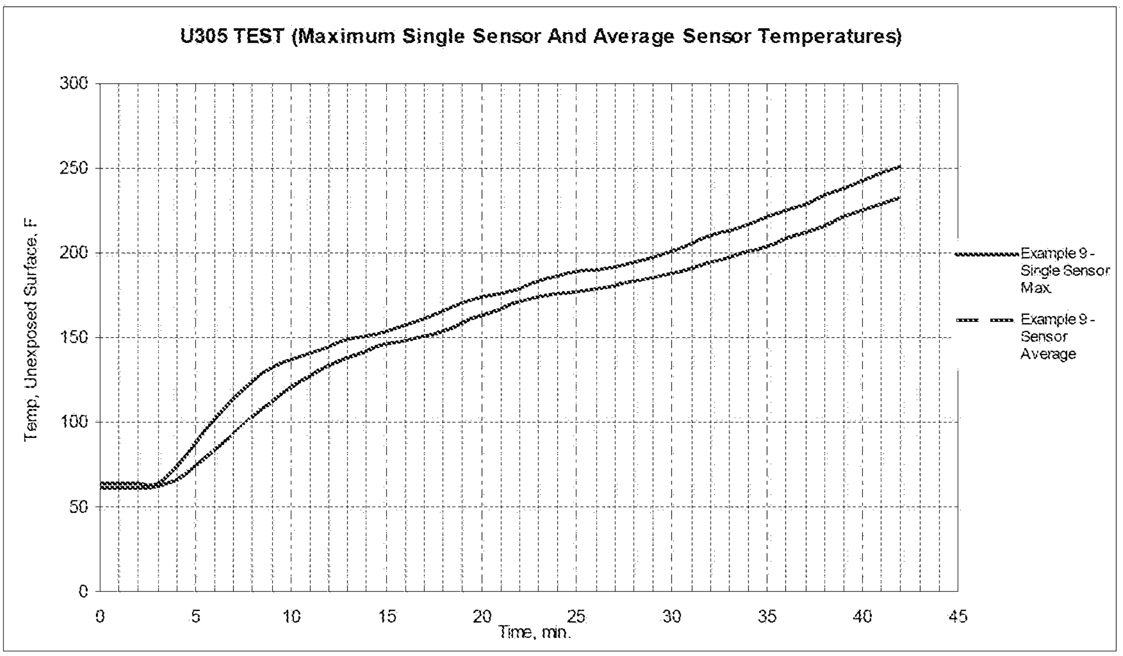
U305 TEST (Maximum Single Sensor And Average Sensor Temperatures)
Temp, Unexposed Surface, F
300
250
200
150
100
50
0
0
5
10
15
20
25
30
35
40
45
Time, min.
Example 9 - Single Sensor Max.
Example 9 - Sensor Average

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 79512510 A
- US 44917706 A
- US 7731794 B
- US 68883905 P
- US 2526066 A
- US 2744022 A
- US 3454456 A
- US 3616173 A
- US 7736720 B
- US 20070048490 A1
- US 20080090068 A1
- US 20100139528 A1
- US 795125 A
- US 6409825 B, Yu
- US 3573947 A
- US 6342284 B
- US 6632550 B
- US 6815049 B
- US 7767019 B
- US 11827722 B
- US 20070255032 A1
- US 6777517 B
- US 5798425 A
- US 2078199 A
- US 5643510 A
- US 5683635 A
- US 10917177 B